(19) Europäisches Patentamt / European Patent Office / Office européen des brevets

(11) **EP 3 141 729 B1**

(12) **EUROPEAN PATENT SPECIFICATION**

(45) Date of publication and mention
of the grant of the patent:
**04.11.2020 Bulletin 2020/45**

(51) Int Cl.:
**F02F 7/00** *(2006.01)*     **F16F 15/10** *(2006.01)*
**F16F 15/26** *(2006.01)*     **F02B 61/02** *(2006.01)*

(21) Application number: **16185977.2**

(22) Date of filing: **26.08.2016**

(54) **ENGINE AND STRADDLED VEHICLE**

MOTOR UND GRÄTSCHSITZFAHRZEUG

MOTEUR ET VÉHICULE À CALIFOURCHON

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **27.08.2015 JP 2015168074**

(43) Date of publication of application:
**15.03.2017 Bulletin 2017/11**

(73) Proprietor: **Yamaha Hatsudoki Kabushiki Kaisha
Iwata-shi, Shizuoka 438-8501 (JP)**

(72) Inventor: **SANO, Taketoshi
Iwata-shi, Shizuoka 438-8501 (JP)**

(74) Representative: **Grünecker Patent- und
Rechtsanwälte
PartG mbB
Leopoldstraße 4
80802 München (DE)**

(56) References cited:
**EP-A1- 1 811 199         WO-A1-01/36798
WO-A1-2012/171789   DE-A1-102009 051 296
US-A- 4 628 876**

**Description**

**BACKGROUND**

**Technical Field**

The present invention relates to an engine including a crankshaft with a shaft center being offset from the cylinder axis, and more particularly to an engine including a mechanism for reducing vibration generated by the primary component of an inertia couple caused by the lateral pressure from the piston.

**Description of the Background Art**

Engines include reciprocating engines, for example. A reciprocating engine includes a motion conversion mechanism for converting reciprocating movements of the piston into rotational movements of the crankshaft (hereinafter referred to as piston-crank mechanism).

As the piston-crank mechanism operates, vibration occurs. In view of this, in a reciprocating engine, a balancer mechanism is provided for reducing vibration generated as the piston-crank mechanism operates.

A balancer mechanism is disclosed in JP 2003-237674 A, for example. This publication discloses a single-shaft balancer mechanism. To act against the primary component of an inertia force generated as the piston-crank mechanism operates (hereinafter referred to as primary inertia force), the single-shaft balancer mechanism generates an inertia force in the opposite direction and with the same magnitude. This reduces vibration caused by the primary inertia force generated as the piston-crank mechanism operates. WO 2012/171789 discloses an engine according to the preamble of independent claim 1.

**SUMMARY**

In recent years, engines including a crankshaft with a shaft center being offset from the cylinder axis (hereinafter referred to as offset engine) have been proposed. In an offset engine, as viewed in the axial direction of the crankshaft, the shaft center of the crankshaft is not located on the cylinder axis, and the angle of rotation of the crankshaft found when the piston moves from its top dead center to its bottom dead center is larger than the angle of rotation of the crankshaft found when the piston moves from its bottom dead center to its top dead center. Thus, the expansion time in an offset engine is longer than that in an engine including a crankshaft with a shaft center located on the cylinder axis (hereinafter referred to as non-offset engine). As a result, an offset engine improves fuel efficiency over a non-offset engine.

In an offset engine, the primary component of an inertia couple caused by a lateral pressure from the piston (hereinafter referred to as primary inertia couple) is larger than in a non-offset engine. In view of this, it has become necessary to consider how to reduce vibration generated by a primary inertia couple caused by a lateral pressure from the piston.

An object of the present invention is to reduce vibration generated by a primary inertia couple caused by a lateral pressure from the piston in an offset engine.

This object is achieved with an engine according to independent claim 1. Preferred embodiments are set out in the dependent claims.

An engine according to an embodiment that does not include all features of the independent claim but illustrates the principle of operation of the present invention includes a motion conversion mechanism and a balancer mechanism. The motion conversion mechanism includes a crankshaft and a piston located within a cylinder. The motion conversion mechanism converts a reciprocating motion within the cylinder of the piston into a rotational motion of the crankshaft. The balancer mechanism reduces vibration generated as the motion conversion mechanism operates. As viewed in an axial direction of the crankshaft, the shaft center of the crankshaft is not located on the cylinder axis of the cylinder. In the motion conversion mechanism, the angle of rotation of the crankshaft found when the piston moves from a top dead center to a bottom dead center is larger than the angle of rotation of the crankshaft found when the piston moves from the bottom dead center to the top dead center. The balancer mechanism includes a first balancer shaft. The first balancer shaft is positioned parallel to the crankshaft, and rotates in the direction opposite to the direction in which the crankshaft rotates at the same speed as the crankshaft. The first balancer shaft is located on that side of the cylinder axis which is opposite to the side with the crankshaft as viewed in the axial direction of the crankshaft.

In the above engine, a primary inertia force generated as the motion conversion mechanism operates and an inertia force generated as the balancer mechanism operates are used, or an inertia force generated as the balancer mechanism operates is used, to reduce vibration generated by a primary inertia couple caused by a lateral pressure from the piston.

The engine may be a single-cylinder engine or a parallel 2-cylinder engine (360° crank). 360° crank means that two crankpins are located at the same position as measured in the direction of rotation of the crankshaft. The engine may be a 4-cycle engine, or 2-cycle engine.

The balancer mechanism may be a single-shaft balancer mechanism, or a double-shaft balancer mechanism.

If the balancer mechanism is a single-shaft balancer mechanism, the motion conversion mechanism includes a crank balancer, and the first balancer shaft includes a balancer. The crank balancer is provided on the crankshaft for generating an inertia force as the crankshaft rotates. The balancer generates an inertia force as the first balancer shaft rotates.

In implementations where the above balancer mechanism is a single-shaft balancer mechanism, it is preferable that a portion of the primary component of the inertia force due to a reciprocating motion mass of the motion conversion mechanism (hereinafter referred to as primary inertia force) and a portion of the inertia force generated as the first balancer shaft rotates are used to reduce the vibration generated by the primary inertia couple caused by the lateral pressure from the piston.

The primary inertia couple caused by the lateral pressure from the piston will be expressed as $mr^2\omega^2 \cdot A_M \cdot \sin(\theta + \alpha_M)$. Here, m is the reciprocating motion mass. r is the crank radius. $\omega$ is the angular velocity of the rotating crankshaft. $A_M$ is the magnitude of the primary inertia couple caused by the lateral pressure from the piston. $\alpha_M$ is the reference phase of the primary inertia couple. $\theta + \alpha_M$ is the phase of the primary inertia couple at a given instant. The phase of the primary inertia couple is relative to the phase of the crankshaft. As viewed in the axial direction of the crankshaft, the reference phase of the crankshaft (0°) is the phase found when the shaft center of the crankpin is located on a reference line that is parallel to the cylinder axis and passes through the shaft center of the crankshaft. The reference position, which is associated with this reference phase, is one of the intersection points of a locus of the shaft center of the crankpin formed as the crankshaft rotates (i.e. a perfect circle) and the above reference line, the one intersection point being the one closer to the piston than the other one is.

In implementations where the above balancer mechanism is a single-shaft balancer mechanism, the first balancer shaft is located in the range of $\alpha_M + 150° + \tau$ to $\alpha_M + 210° + \tau$ from the reference position in the direction in which the crankshaft rotates. The reference position is one of the intersection points of a reference line extending parallel to the cylinder axis and passing through the shaft center of the crankshaft and a locus of the shaft center of the crankpin formed as the crankshaft rotates (i.e. a perfect circle), the one intersection point being the one closer to the piston than the other one is as measured in the direction in which the reference line extends. $\tau$ is the phase delay in the primary inertia force due to the reciprocating motion mass of the motion conversion mechanism.

In implementations where the above balancer mechanism is a single-shaft balancer mechanism, it is preferable that the following equation is established.

[Formula 1]

$$k_{M1} = \frac{r \cdot A_M}{L_B} \qquad (1)$$

Here, $k_{M1}$ is the magnitude of the component in the crank balancer that contributes to reduction of vibration generated by the primary inertia couple caused by the lateral pressure from the piston. r is the crank radius. $L_B$ is the distance between the shaft center of the first balancer shaft and the shaft center of the crankshaft.

In implementations where the above balancer mechanism is a single-shaft balancer mechanism, it is preferable that the following equation is established.

[Formula 2]

$$\alpha_{M1} = 180° - \tau \qquad (2)$$

Here, the phase $\alpha_{M1}$ is the phase of the component in the crank balancer that contributes to reduction of vibration generated by the primary inertia couple caused by the lateral pressure from the piston.

In implementations where the above balancer mechanism is a single-shaft balancer mechanism, it is preferable that the following equation is established.

[Formula 3]

$$\alpha_{BM1} = 180° + \tau \qquad (3)$$

Here, the phase $\alpha_{BM1}$ is the phase of the component in the balancer that contributes to reduction of vibration generated by the primary inertia couple caused by the lateral pressure from the piston.

The magnitude $k_{BM1}$ of the component in the balancer that contributes to reduction of vibration generated by the primary inertia couple caused by the lateral pressure from the piston is the same as $k_{M1}$ discussed above.

In implementations where the above balancer mechanism is a single-shaft balancer mechanism, it is preferable that the remainder of the primary inertia force due to the reciprocating motion mass, the remainder of the inertia force due to the crank balancer, and the remainder of the inertia force generated as the balancer mechanism operates are used to reduce vibration generated by the couple caused by the primary inertia force generated as the motion conversion mechanism operates and the inertia force generated as the balancer mechanism operates to position the instantaneous center of rotation for the engine at a predetermined position.

In such cases, the following equations are established for the magnitude of the crank balancer $k_{total}$, the phase of the crank balancer $\alpha_{total}$, the magnitude of the balancer $k_{Btotal}$ and the phase of the balancer $\alpha_{Btotal}$.

[Formula 4]

$$k_{total} = \sqrt{\left(k_{M1} \cdot \cos \alpha_{M1} + k_{IC} \cdot \cos \alpha_{IC}\right)^2 + \left(k_{M1} \cdot \sin \alpha_{M1} + k_{IC} \cdot \sin \alpha_{IC}\right)^2} \qquad (4)$$

[Formula 5]

$$\alpha_{total} = \tan^{-1}\left(\frac{k_{M1} \cdot \sin \alpha_{M1} + k_{IC} \cdot \sin \alpha_{IC}}{k_{M1} \cdot \cos \alpha_{M1} + k_{IC} \cdot \cos \alpha_{IC}}\right) \qquad (5)$$

[Formula 6]

$$k_{Btotal} = \sqrt{\left(k_{BM1} \cdot \cos \alpha_{BM1} + k_{BIC} \cdot \cos \alpha_{BIC}\right)^2 + \left(k_{BM1} \cdot \sin \alpha_{BM1} + k_{BIC} \cdot \sin \alpha_{BIC}\right)^2} \qquad (6)$$

[Formula 7]

$$\alpha_{Btotal} = \tan^{-1}\left(\frac{k_{BM1} \cdot \sin \alpha_{BM1} + k_{BIC} \cdot \sin \alpha_{BIC}}{k_{BM1} \cdot \cos \alpha_{BM1} + k_{BIC} \cdot \cos \alpha_{BIC}}\right) \qquad (7)$$

Here, $k_{IC}$ is the magnitude of the component in the crank balancer that reduces vibration generated by the couple caused by the primary inertia force generated as the motion conversion mechanism operates and the inertia force generated as the balancer mechanism operates. $\alpha_{IC}$ is the phase of the component in the crank balancer that reduces vibration generated by the couple caused by the primary inertia force generated as the motion conversion mechanism operates and the inertia force generated as the balancer mechanism operates. $k_{BIC}$ is the magnitude of the component in the balancer that reduces vibration generated by the couple caused by the primary inertia force generated as the motion conversion mechanism operates and the inertia force generated as the balancer mechanism operates. $\alpha_{BIC}$ is the phase of the component in the balancer that reduces vibration generated by the couple caused by the primary inertia force generated as the motion conversion mechanism operates and the inertia force generated as the balancer mechanism operates.

For example, if the engine is directly positioned on the vehicle body frame without any link mechanism in between, the instantaneous center of rotation for the engine is preferably at the position of a hole formed in the engine and through which a pivot shaft provided on the vehicle body frame is inserted. In this case, it is possible to prevent engine vibration from being transmitted to the vehicle body frame.

For example, if the engine is positioned on the vehicle body frame with a link mechanism in between, the instantaneous center of rotation for the engine is preferably at the position of a hole formed in the engine and through which a support shaft provided on the link mechanism is inserted. In this case, it is possible to further prevent engine vibration from being transmitted to the vehicle body frame by setting an appropriate link angle for the link mechanism, for example.

If the above balancer mechanism is a double-shaft balancer mechanism, the balancer mechanism further includes a second balancer shaft. The second balancer shaft is located on that side of the cylinder axis which is opposite to that with the first balancer shaft as viewed in the axial direction of the crankshaft.

If the above balancer mechanism is a double-shaft balancer mechanism, the first balancer shaft is located at a position different from that of the second balancer shaft as measured in the direction in which the cylinder axis extends as viewed in the axial direction of the crankshaft.

If the above balancer mechanism is a double-shaft balancer mechanism, the first and second balancer shafts are preferably located on that side of an imaginary line which is opposite to that with the piston as viewed in the axial direction of the crankshaft, the imaginary line passing through the shaft center of the crank shaft and extending in the direction perpendicular to the cylinder axis.

If the above balancer mechanism is a double-shaft balancer mechanism, each of the first and second balancer shafts includes a balancer. The balancer of the first balancer shaft generates an inertia force as the first balancer shaft rotates. The balancer of the second balancer shaft generates an inertia force as the second balancer shaft rotates.

The second balancer shaft rotates in the direction opposite to the direction in which the crankshaft rotates, for example. Preferably, the locus of the end point of the vector representing the primary inertia force generated as the motion conversion mechanism operates is perfectly circular. In this case, a portion of the inertia force generated as the first balancer shaft rotates and a portion of the inertia force generated as the second balancer shaft rotates are used to reduce the vibration generated by the primary inertia couple caused by the lateral pressure from the piston.

Starting from the above implementations, it is preferable that the inertia force generated by the crank balancer, the remainder of the inertia force generated as the first balancer shaft rotates, and the remainder of the inertia force generated as the second balancer shaft rotates are used to reduce vibration caused by the primary inertia force due to the reciprocating motion mass of the motion conversion mechanism.

The second balancer rotates in the same direction in which the crankshaft rotates, for example. In this case, a portion of the inertia force generated as the first balancer shaft rotates and a portion of the inertia force generated as the second balancer shaft rotates are used to reduce the vibration generated by the primary inertia couple caused by the lateral pressure from the piston.

Starting from the above implementations, it is preferable that the remainder of the inertia force generated as the first balancer shaft rotates and the remainder of the inertia force generated as the second balancer shaft rotates are used to reduce vibration caused by the primary inertia force due to the reciprocating motion mass of the motion conversion mechanism.

BRIEF DESCRIPTION OF THE DRAWINGS

FIG. 1 is a left side view of a motorcycle including an engine in a first embodiment of the present invention.
FIG. 2 is a schematic view of the engine in the first embodiment of the present invention.
FIG. 3 is a schematic conceptual diagram of the internal structure of the engine shown in FIG. 2.
FIG. 4 is a conceptual diagram illustrating the positional relationship between the position of the instantaneous center of rotation, the center of gravity, the crankshaft and the balancer.
FIG. 5 is a conceptual diagram illustrating the relationship between the rotational component and reciprocating component of the primary inertia force.
FIG. 6 is a view resulting from a rotation of FIG. 5, where a straight line connecting the position of the instantaneous center of rotation with the center of gravity extends in the horizontal direction.
FIG. 7 is a conceptual diagram illustrating the relationship between the phase of the balancer and the phase of the rotational component of the primary inertia force.
FIG. 8 is a conceptual diagram illustrating the reference position.
FIG. 9 is a conceptual diagram illustrating the primary inertia force found when $\tau + 90°$.
FIG. 10 is a graph illustrating the inertia couple in a non-offset engine.
FIG. 11 is a graph illustrating the inertia couple in an offset engine.
FIG. 12 is a conceptual diagram of an offset engine.
FIG. 13 is a conceptual diagram illustrating the inertia couple in an offset engine.
FIG. 14 is a conceptual diagram illustrating the balancer shaft located at the position most suitable for reducing the primary inertia couple.
FIG. 15 is a graph illustrating the relationship between the vibration acceleration in the pivot shaft found when the balancer shaft is at the most suitable position, and the engine speed.

FIG. 16 is a graph illustrating the relationship between the vibration acceleration in the pivot shaft found when the balancer shaft has advanced 30° in the direction opposite to the direction of crank rotation from the most suitable position, and the engine speed.

FIG. 17 is a graph illustrating the relationship between the vibration acceleration in the pivot shaft found when the balancer shaft has advanced 30° in the direction of crank rotation from the most suitable position, and the engine speed.

FIG. 18 is a graph illustrating the relationship between the vibration acceleration in the pivot shaft found when the balancer shaft is at a position that is not suitable for reducing the primary inertia couple, and the engine speed.

FIG. 19 is a schematic view illustrating the engine being attached to the vehicle body frame by means of a link mechanism provided in between.

FIG. 20 is a schematic view of the internal structure of an engine in a related example that is not part of the present invention.

FIG. 21 is a conceptual diagram illustrating the conditions for balancing the inertia forces generated in the two balancer shaft with the inertia force generated in the crankshaft in the engine of FIG. 20.

FIG. 22 is a conceptual diagram illustrating the conditions for balancing the inertia forces generated in the two balancer shafts with the inertia force generated in the crankshaft, and counteracting the pitch moment in the engine of FIG. 20.

FIG. 23 is a conceptual diagram illustrating the conditions for balancing the inertia forces generated in the two balancer shafts in the engine of FIG. 20 with the inertia force generated in the crankshaft, counteracting the pitch moment, and counteracting the excitation moment due to the lateral pressure from the piston.

FIG. 24 is a conceptual diagram illustrating the conditions for balancing the inertia forces generated in the two balancer shafts with the inertia force generated in the crankshaft in an engine in an example application of the related example that is not part of the present invention.

FIG. 25 is a conceptual diagram illustrating the conditions for balancing the inertia forces generated in the two balancer shafts with the inertia force generated in the crankshaft, and counteracting the excitation moment due to the lateral pressure from the piston in the engine in the example application of the related example that is not part of the present invention.

## DETAILED DESCRIPTION OF THE PREFERRED EMBODIMENTS

A straddled vehicle according to an embodiment of the present invention will now be described with reference to the drawings. In the present embodiment, a motorcycle will be described as an example of the straddled vehicle. The same or corresponding parts throughout the drawings will be labeled with the same characters, and their description will not be repeated.

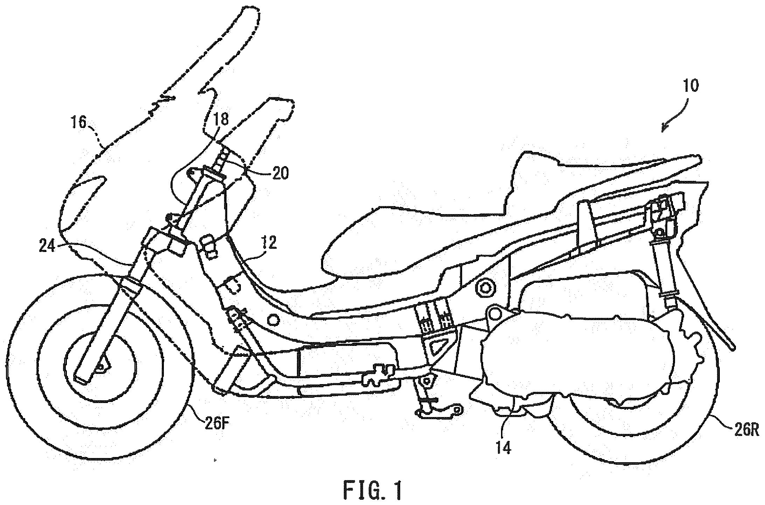

FIG. 1 is a left side view of a motorcycle 10 according to an embodiment of the present invention. The motorcycle 10 includes a vehicle body frame 12 and an engine 14.

The vehicle body frame 12 is covered with a vehicle cover 16. The vehicle body frame 12 includes a head pipe 18.

The head pipe 18 is provided on the front portion of the vehicle body frame 12. A steering shaft 20 is inserted through the head pipe 18. Handlebars are provided on the top end of the steering shaft 20. A front fork 24 is provided on the bottom end of the steering shaft 20. The front fork 24 rotatably supports the front wheel 26F.

The engine 14 is an unit-swing engine. The engine 14 is supported by the vehicle body frame 12. As power from the engine 14 is transmitted to the rear wheel 26R, the rear wheel 26R rotates.

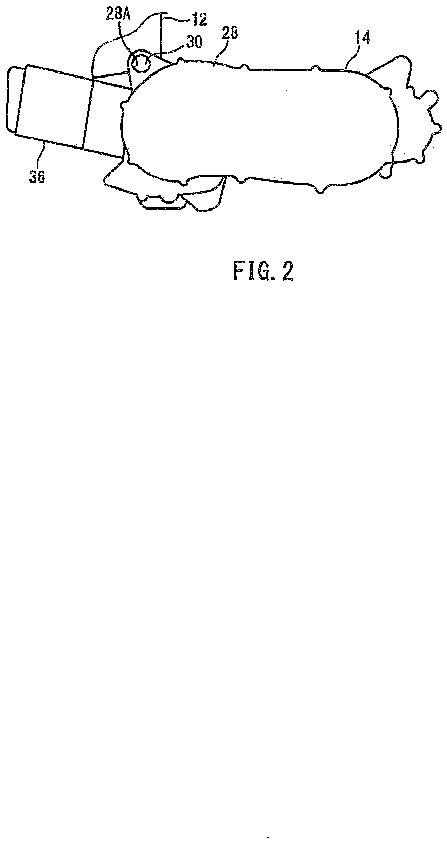

The engine 14 will be described with reference to FIG. 2. The engine 14 is a 4-cycle single-cylinder engine. The engine 14 rotatably supports the rear wheel 26R (see FIG. 1). The engine 14 is swingably placed on the vehicle body frame 12. More specifically, the engine 14 includes a case 28. The case 28 has a hole 28A formed therein. The hole 28A extends in the vehicle-width direction. A pivot shaft 30 is inserted into the hole 28A. The pivot shaft 30 is provided on the vehicle body frame 12.

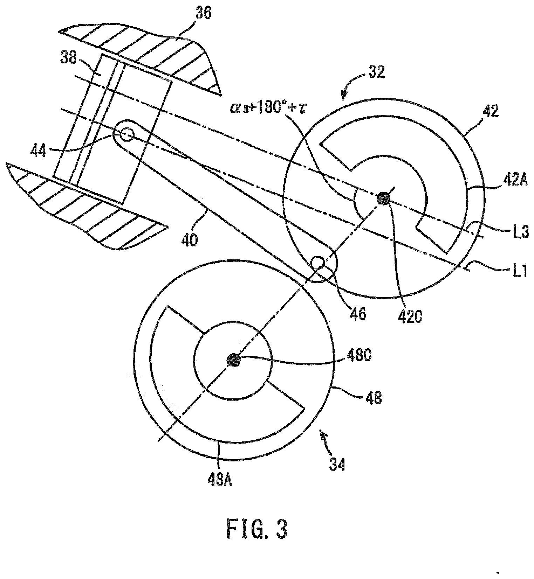

The interior construction of the engine 14 will be described with reference to FIG. 3. The engine 14 includes a piston-crank mechanism 32 and a balancer mechanism 34.

The piston-crank mechanism 32 includes a piston 38, a connecting rod 40, and a crankshaft 42. These parts will be described below.

The piston 38 is located within the cylinder 36. The piston 38 is capable of reciprocating along the central axis of the cylinder 36 (hereinafter referred to as cylinder axis L1).

The connecting rod 40 connects the piston 38 with the crankshaft 42. More specifically, one end of the connecting rod 40 is connected to the piston 38 via a piston pin 44. The other end of the connecting rod 40 is connected to the crankshaft 42 via a crankpin 46.

The crankshaft 42 has a shaft center 42C. The crankshaft 42 is rotatable about the shaft center 42C. The crankshaft 42 includes a crank balancer 42A. As the crankshaft 42 rotates, the crank balancer 42A produces an inertia force.

In the piston-crank mechanism 32, reciprocating movements of the piston 38 are converted to rotational movements of the crankshaft 42. That is, the piston-crank mechanism 32 serves as a motion conversion mechanism.

The balancer mechanism 34 is a single-shaft balancer mechanism. The balancer mechanism 34 includes a balancer shaft 48. The balancer shaft 48 has a shaft center 48C. The balancer shaft 48 is rotatable about the shaft center 48C. The balancer shaft 48 is parallel to the crankshaft 42. The balancer shaft 48 rotates in the direction opposite to that of the crankshaft 42. The balancer shaft 48 rotates at the same speed as the crankshaft 42. For example, a gear provided on the balancer shaft 48 may engage a gear provided on the crankshaft 42 to enable the balancer shaft 48 to rotate together with the crankshaft 42. The balancer shaft 48 includes a balancer 48A. As the balancer shaft 48 rotates, the balancer 48A produces an inertia force.

In the engine 14, as viewed in the axial direction of the crankshaft 42, the cylinder axis L1 does not pass through the shaft center 42C of the crankshaft 42. In the engine 14, the angle of rotation of the crankshaft 42 found when the piston 38 is moving from the top dead center to the bottom dead center is larger than the angle of rotation of the crankshaft 42 found when the piston 38 is moving from the bottom dead center to the top dead center. That is, the engine 14 is an "offset" engine.

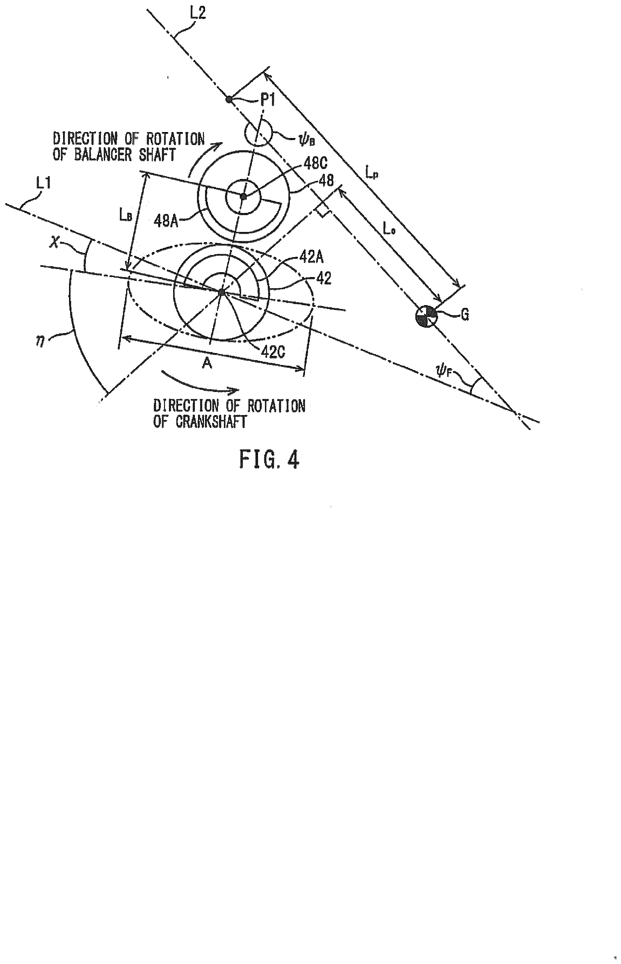

In the engine 14, it is possible to reduce vibration produced by a primary inertia couple caused by a lateral pressure from the piston while positioning the instantaneous center of rotation of the engine 14 at the position of the pivot shaft 30. The reasons for this will be described below. FIGS. 4 to 7 and 9, to which reference will be made in the following description, illustrate how to position the instantaneous center of rotation of the engine 14 at the position of the pivot shaft 30, and the position of the balancer shaft 48 in each of these drawings is not consistent with its position shown in FIG. 3.

1. Settings for Instantaneous Center of Rotation of Engine

The engine 14 is a single-cylinder engine. Thus, the primary inertia force due to the reciprocating motion mass of the piston-crank mechanism 32 represents the main exciting force.

In a single-cylinder engine, for example, the phases and magnitudes of the crank balancer and balancer may be symmetry 50 % and their effects as translational forces may be balanced to reduce vibration of the engine at its center of gravity. In this case, the crankshaft is located distant from the balancer shaft, producing a couple. As a result, vibration is generated that rotates the entire engine. In this case, no translational vibration is produced at the center of gravity about which the rotation occurs, whereas vibration in the direction of a tangent line for the rotation occurs at a position distant from the center of gravity with an amplitude proportional to the distance from the center of gravity.

The position at which the engine is suspended on the vehicle body frame is not necessarily close to the center of gravity. Thus, if the engine is supported at a position distant from the center of gravity, the use of the above approach causes vibration from the rotation to be amplified by the distance from the center of gravity and transmitted to the vehicle body frame. To reduce such vibration from rotation, for example, the phases and magnitudes of the crank balancer and balancer may be different from symmetry 50 % to reduce the couple. However, in this case, the translational forces that have not been converted to the couple cause vibration in the translational direction. The vibration in the translational direction is added to the vibration from rotation.

In the engine 14, the vibration in the translational direction and the vibration from rotation are combined to position the instantaneous center of rotation (i.e. the point at which the vibration caused by the primary inertia force of the reciprocating motion mass of the piston-crank mechanism 32 is at zero) at the position at which the pivot shaft 30 is located. The method for achieving this will be described below.

The primary inertia forces produced in the engine 14 are (1) the primary inertia force produced as the piston-crank mechanism 32 operates, and (2) the inertia force produced as the balancer mechanism 34 operates.

The primary inertia force produced as the piston-crank mechanism 32 operates is the resultant force of the primary inertia force produced by the reciprocating motion mass of the piston-crank mechanism 32 and the inertia force produced as the crankshaft 42 rotates (i.e. inertia force caused by the crank balancer 42A). The vector of this resultant force rotates in the direction opposite to that of the crankshaft 42. The magnitude and direction of the vector of the resultant force periodically changes when the vector of the resultant force rotates, where each period corresponds to one rotation.

The inertia force produced as the balancer mechanism 34 operates is the inertia force produced as the balancer shaft 48 rotates (i.e. inertia force caused by the balancer 48A). The vector of this inertia force has a constant magnitude and rotates at the same velocity in the direction opposite to that of the crankshaft 42.

The inertia force produced as the balancer mechanism 34 operates and the primary Inertia force produced as the piston-crank mechanism 32 operates are always balanced as translational forces if the phases and magnitudes of the crank balancer 42A and balancer 48A are symmetry 50 %. In this case, only the couple acts on the engine 14, producing vibration that rotates the entire engine 14.

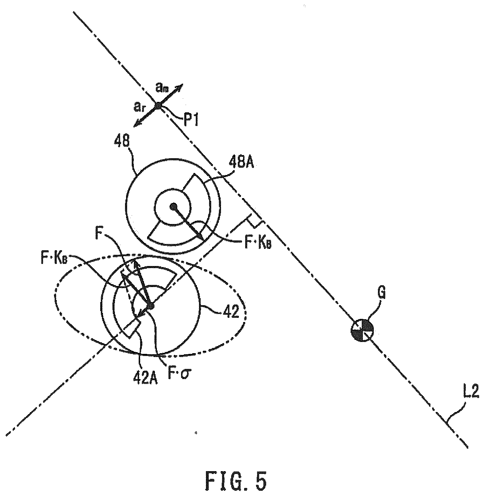

At this time, as shown in FIG. 5, an acceleration $a_m$ is generated at position P1 in the direction of a tangent line for the rotation about the center of gravity G, i.e. the direction perpendicular to straight line L2 passing through position P1 and the center of gravity G.

If a translational force $F_1$ with a magnitude that satisfies the following equation acts on the center of gravity G in the direction opposite to that of the acceleration $a_m$, the vibration acceleration at position P1 is cancelled out. That is, the vibration caused by the primary inertia forces produced in the engine 14 is counteracted.

[Formula 8]

$$F_I = M \cdot a_m = M \cdot \frac{F \cdot k_B \cdot L_B \cdot L_P}{I} \cdot cos\, \theta_C \qquad (8)$$

Here, M is the mass of the engine 14. F is the primary inertia force caused by the reciprocating motion mass of the piston-crank mechanism 32. $k_B$ is the magnitude of the balancer 34. $\theta_c$ is the angle of rotation of the crankshaft 42 relative to the position with the maximum couple. I is the inertial moment of the engine 14. $L_B$ is the distance between the shaft center 42C of the crankshaft 42 and the shaft center 48C of the balancer shaft 48. $L_P$ is the distance between the center of gravity G and position P1.

At this time, it is in the piston-crank mechanism 32 and balancer mechanism 34 that forces are produced within the engine 14. In view of this, to cancel out the vibration acceleration at position P1, the primary inertia force produced as the piston-crank mechanism 32 operates is composed of (i) the component that is in balance with the inertia force produced as the balancer mechanism 34 operates to form a couple, and (ii) the component for cancelling out the acceleration caused by this couple at position P1, as shown in FIG. 5.

The component of (i) has a constant magnitude and rotates at the same velocity in the direction of the rotation of the vector of the inertia force produced as the balancer mechanism 34 operates. The component of (ii) has a constant direction, and its magnitude changes in synchronization with the phase of the couple. In the following description, the component of (i) is the rotational component of the primary inertia force produced as the piston-crank mechanism 32 operates, while the component of (ii) is the reciprocating component of the primary inertia force produced as the piston-crank mechanism 32 operates.

A translational force acting on a point distant from the center of gravity G has the function as a translational force having the same magnitude and direction and acting on the center of gravity G, and the function as a couple produced by the direction of the force and the distance from the center of gravity G. Thus, the acceleration $a_r$ produced at position P1 by the reciprocating component of the primary inertia force acting on the crankshaft 42 is decided considering the above two functions, and is expressed by the following equation.

[Formula 9]

$$a_r = F \cdot \sigma \cdot cos\, \theta_c \, (\frac{1}{M} + \frac{L_C \cdot L_P}{I})$$

$$= F \cdot \sigma \cdot cos\, \theta_c \, (\frac{1 + M \cdot L_C \cdot L_P}{I \cdot M}) \qquad (9)$$

Here, $\sigma$ is the magnitude of the reciprocating component of the primary inertia force caused by the reciprocating motion mass of the piston-crank mechanism 32. Lc is the distance between the center of gravity G and the shaft center 42C of the crankshaft 42 as measured in the direction in which straight line L2 passing through the center of gravity G and position P1 extends. $L_P$ is the distance between the center of gravity G and position P1.

To balance the acceleration due to the above couple and the acceleration due to the reciprocating component of the primary inertia force at position P1, the following equation must be satisfied.

[Formula 10]

$$a_m = a_r \qquad (10)$$

Calculating the above equation gives the following relationship.

[Formula 11]

$$\mu = \frac{k_B}{\sigma} = \frac{I + M \cdot L_C \cdot L_P}{M \cdot L_B \cdot L_P} \qquad (11)$$

That is, if the magnitude of the rotational component of the primary inertia force and the magnitude of the reciprocating component of the primary inertia force described above satisfy the relationship shown in the above equation of Formula 11, the vibration acceleration caused by the primary inertia force due to the reciprocating motion mass of the piston-crank mechanism 32 is cancelled out at position P1.

As will be apparent form the above discussion, to position the instantaneous center of rotation at an arbitrary position within the engine 14, the following conditions 1 to 4 must be satisfied.

Condition 1: the primary Inertia force produced as the piston-crank mechanism 32 operates is composed from the following two components:

a) the rotational component in balance with the inertia force of the balancer mechanism 34 to form a couple, $(F \cdot k_B)$; and
b) the reciprocating component for counteracting the acceleration due to this couple at position P1, $(F \cdot \sigma)$.

Condition 2: the magnitude of the rotational component and the magnitude of the reciprocating component described above satisfy the above equation of Formula 11.
Condition 3: the magnitude of the couple and the magnitude of the reciprocating component have the same phase.
Condition 4: the reciprocating component acts in the direction that is perpendicular to the straight line connecting the center of gravity G with position P1 and that counteracts the acceleration due to the couple.

The locus of the end point of the vector of the primary inertia force satisfying the above conditions 1 to 4 is elliptical. A method of determining the direction of the major axis of this ellipse, $\chi$, and the length of the long axis, A, will be described below.

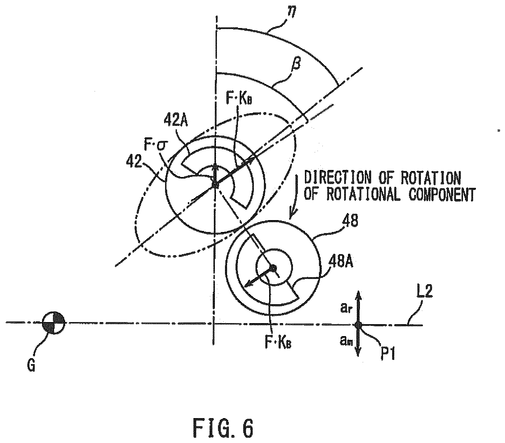

As shown in FIG. 6, FIG. 5 is rotated such that straight line L2 connecting the center of gravity G with position P1 extends in the horizontal direction. It is assumed that the reciprocating component is an inertia force caused by an imaginary reciprocating motion mass and the rotational component is an inertia force caused by an imaginary crank balancer. In this case, the formula of asymmetric crank balancing may be used to determine the magnitude and direction of the combined inertia force. Since the rotational component rotates in the direction opposite to that of the crankshaft, the phase of the imaginary crank balancer, $\beta$, is opposite to the direction of rotation of the crankshaft. That is, $\beta$ satisfies the following equation.

[Formula 12]

$$\beta = 360° - \Psi_B \qquad (12)$$

The magnitude of the imaginary crank balancer is the magnitude of the rotational component relative to the magnitude of the reciprocating component, i.e. $\mu$.

The formula relating to the ellipse for the primary inertia force of asymmetric crank balancing (i.e. locus of the end point of the vector of the primary inertia force) is as follows.

[Formula 13]

$$\chi = 0.5 \tan^{-1} \left( \frac{k \cdot \sin(\alpha + \tau)}{0.5\varepsilon + k \cos(\alpha + \tau)} \right) \qquad (13)$$

[Formula 14]

$$A = 0.5\varepsilon + \sqrt{(0.5\varepsilon + k \cdot \cos(\alpha + \tau))^2 + (k \cdot \sin(\alpha + \tau))^2} \qquad (14)$$

[Formula 15]

$$B = -0.5\varepsilon + \sqrt{(0.5\varepsilon + k \cdot \cos(\alpha + \tau))^2 + (k \cdot \sin(\alpha + \tau))^2} \qquad (15)$$

Here, $\chi$ is the angle of inclination of the long axis of the ellipse (i.e. ellipse of the primary inertia force of asymmetric crank balancing) relative to the cylinder axis L1. A is the length of the long axis of the ellipse (i.e. ellipse of the primary inertia force of asymmetric crank balancing). B is the length of the short axis of the ellipse (i.e. ellipse of the primary inertia force of asymmetric crank balancing). k is defined by the following equation of Formula 16. $\alpha$ is the phase of the crank balancer relative to the position at which the crankpin is positioned. $\varepsilon$ is the amplitude scale factor of the offset engine. In an offset engine, the stroke is extended. Thus, the amplitude of the primary inertia force slightly increases. The ratio here is designated by $\varepsilon$.
[Formula 16]

$$k = \frac{m_w \cdot r_w}{m_r \cdot r} \qquad (16)$$

Here, $m_w$ is the mass of the crank balancer. $r_w$ is the distance between the crank balancer and the shaft center of the crankshaft. $m_r$ is the reciprocating motion mass. r is the crank radius (i.e. distance between the shaft center of the crankshaft and the shaft center of the crankpin).
In a non-offset engine, in the above equations of Formulas 13 to 15, $\tau$ is 0 and e is 1.
As shown in FIG. 6, if the inertia force due to an imaginary reciprocating motion mass and the inertia force due to an imaginary crank balancer are considered, an angle is defined in the direction opposite to the original direction of rotation of the crankshaft. Thus, $\chi$, which is obtained by substituting $\beta$ for $\alpha$ in the above equation of Formula 13 and substituting $\mu$ for k, corresponds to $\eta$ in FIG. 6. That is, the relationship illustrated by the following equation is established.
[Formula 17]

$$\eta = 0.5\tan^{-1}\left(\frac{\mu \cdot \sin\beta}{0.5 + \mu\cos\beta}\right) \qquad (17)$$

As shown in FIG. 4, the direction of the imaginary major axis, $\eta$, the direction of the original major axis, $\chi$, and the angle of inclination of the cylinder axis L1 relative to straight line L2 passing through the center of gravity G and position P1, $\overline{\Psi}_F$, satisfy the following relationship.
[Formula 18]

$$\Psi_F + \chi + \eta = 90° \qquad (18)$$

Thus, the following equation can be obtained for the direction of the major axis $\chi$.
[Formula 19]

$$\chi = 90° - (\eta + \Psi_F) \qquad (19)$$

In connection with the length of the long axis A, in the above equation of Formula 14, $\beta$ may be substituted for $\alpha$ and $\mu$ may be substituted for k to give the following equation.
[Formula 20]

$$A' = \frac{A}{\sigma} = 0.5 + \sqrt{(0.5 + \mu \cdot \cos\beta)^2 + (\mu \cdot \sin\beta)^2} \qquad (20)$$

In connection with the length of the short axis B, in the above equation of Formula 15, $\beta$ may be substituted for $\alpha$ and $\mu$ may be substituted for k to give the following equation.
[Formula 21]

$$B' = \frac{(-B)}{\sigma} = -0.5 + \sqrt{\left(0.5 + \mu \cdot \cos \beta\right)^2 + \left(\mu \cdot \sin \beta\right)^2} \quad (21)$$

The values from the above equations of Formulas 20 and 21 are relative to an imaginary inertia force. Thus, the results of the calculations are values relative to the reciprocating component (F·σ) discussed hereto, and not the original primary inertia force.

The direction of rotation of the imaginary crank balancer is opposite to the direction of rotation of the original crankshaft 42. Thus, the above value B' has the sign opposite to that of the original value B. The above equations of Formulas 20 and 21 give the following relationship.
[Formula 22]

$$A - B = \varepsilon \quad (22)$$

Using this relationship gives the following equation.
[Formula 23]

$$A' + B' = \frac{A}{\sigma} + \frac{(-B)}{\sigma} = \frac{(A-B)}{\sigma} = \frac{\varepsilon}{\sigma} \quad (23)$$

Rearranging the above equation of Formula 23 gives the following equation.
[Formula 24]

$$\sigma = \frac{\varepsilon}{A' + B'} = \frac{\varepsilon}{2\sqrt{(0.5 + \mu \cdot \cos \beta)^2 + (\mu \cdot \sin \beta)^2}} \quad (24)$$

A calculation using the above equations of Formulas 23 and 20 gives the following equation.
[Formula 25]

$$A = \sigma A'$$

$$= 0.5\varepsilon + \frac{\varepsilon}{4\sqrt{(0.5 + \mu \cdot \cos \beta)^2 + (\mu \cdot \sin \beta)^2}} \quad (25)$$

The rotational component (F·$k_B$) of the primary inertia force has the same magnitude as the inertia force produced as the balancer mechanism 34 operates according to the above definitions. The rotational component (F·$k_B$) and the reciprocating component (F·σ) satisfy the relationship of the above equation of Formula 11 according to the above definitions. That is, the following equation is established.
[Formula 26]

$$k_B = \frac{\mu \cdot \varepsilon}{2\sqrt{(0.5 + \mu \cdot \cos \beta)^2 + (\mu \cdot \sin \beta)^2}} \quad (26)$$

The rotational component of the primary inertia force and the inertia force produced as the balancer mechanism 34 operates (i.e. inertia force produced by the balancer 48A) form a couple. Thus, the rotational component of the primary inertia force and the inertia force produced as the balancer mechanism 34 operates always face in opposite directions. Accordingly, if it is known in which direction the rotational component of the primary inertia force faces at a given crank angle (i.e. angle of rotation of the crankshaft 42), the direction of the inertia force due to the balancer 48A at that time point can be determined. In addition, from the crank angle at that time, the phase $\alpha_B$ of the balancer 48A at a time point (or crank angle) that provides a reference can be calculated.

The primary inertia force due to the reciprocating motion mass is zero when the crank angle is $\tau+90°$. At this time, the primary inertia force of the piston-crank mechanism 32 corresponds to the inertia force due to the crank balancer 42A. The direction of the inertia force due to the crank balancer 42A, $\alpha_{90}$, is the direction of the crank balancer $\alpha$ plus $\tau+90°$. That is, $\alpha_{90}$ satisfies the following relationship.
[Formula 27]

$$\alpha_{90} = \alpha + \tau + 90° \qquad (27)$$

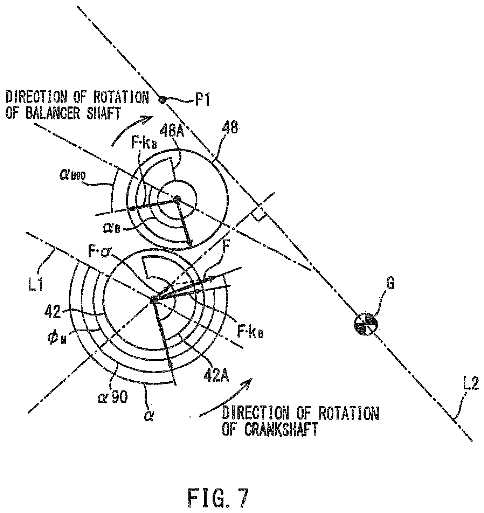

As discussed above, the primary inertia force of the piston-crank mechanism 32 is composed of a rotational component and a reciprocating component. The direction of the rotational component at the time of $\tau+90°$ will be designated by $\varphi_M$. The phase of the balancer 48A at the time of $\tau+90°$ after the top dead center will be designated by $\alpha_{B90}$. The rotational component of the primary inertia force and the inertia force of the balancer 48A are always in balance to form a couple. Thus, as shown in FIG. 7, the following equation is established.
[Formula 28]

$$\alpha_{B90} = \phi_M - 180° \qquad (28)$$

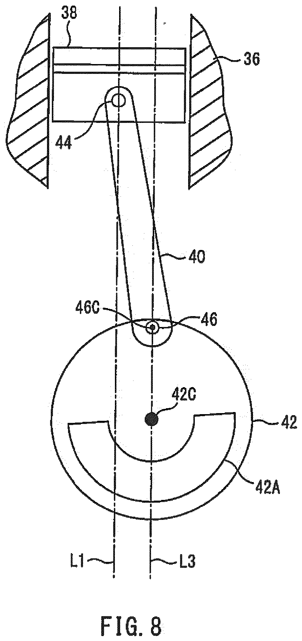

The balancer 48A rotates in the direction opposite to that of the crankshaft 42. Thus, as shown in FIG. 7, the following relationship is established for the phase $\alpha_B$ of the balancer 48A at the reference position. In the reference position, as shown in FIG. 8, the shaft center 46C of the crankpin 46 is located at the position closest to the piston 48 on straight line L3 which passes through the shaft center 42C of the crankshaft 42 and extends parallel to the cylinder L1.
[Formula 29]

$$\alpha_B = \alpha_{B90} + \tau + 90° \qquad (29)$$

As discussed above, $\alpha_{B90}$ can be determined from $\varphi_M$. That is, the above equation of Formula 29 can be rearranged as described below. Thus, if the direction $\varphi_M$ of the rotational component of the primary inertia force at $\tau+90°$ is known, the direction $\alpha_B$ of the balancer 48A at the reference position can be determined.
[Formula 30]

$$\alpha_B = \phi_M + \tau - 90° \qquad (30)$$

As discussed above, at the time of $\tau+90°$, the inertia force due to the reciprocating motion mass is zero. Thus, the primary inertia force of the piston-crank mechanism 32 is equal to the inertia force due to the crank balancer 42A. The direction and magnitude of the primary inertia force can be determined from the direction and magnitude of the crank balancer 42A.

As discussed above, the primary inertia force of the piston-crank mechanism 32 is composed of a rotational component and a reciprocating component. Thus, the vector of the rotational component can be obtained by subtracting the vector of the reciprocating component from the vector of the primary inertia force.

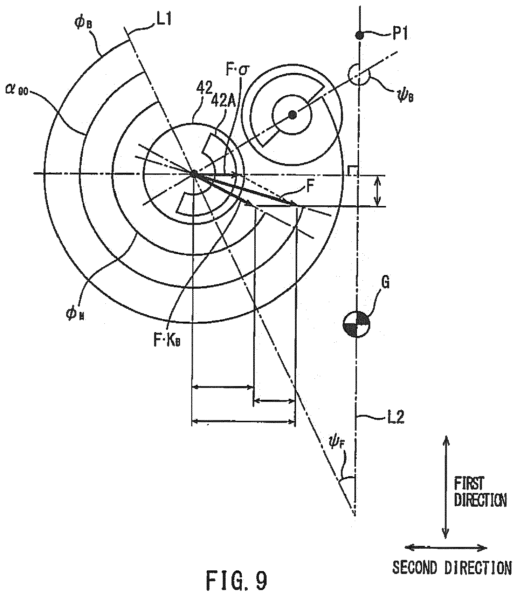

The direction of the reciprocating component is constant. The direction of the reciprocating component is perpendicular to straight line L2 connecting the center of gravity G with position P1. As shown in FIG. 9, the vector of the primary inertia force of the crankshaft 42 is resolved into the component in the direction in which straight line L2 passing through the center of gravity G and position P1 extends (i.e. first direction) and a component in a second direction perpendicular to the first direction. The former component is contained only in the rotational component. Thus, the following relationship can be derived.
[Formula 31]

$$k \cdot \cos (\alpha_{90} + \Psi_F) = k_B \cdot \cos (\phi_M + \Psi_F) \qquad (31)$$

Rearranging the above equation of Formula 31 gives the following equation.
[Formula 32]

$$\cos (\phi_M + \Psi_F) = \frac{-k}{k_B} \cdot \sin (\alpha + \tau + \Psi_F) \qquad (32)$$

Among the variables included in the above equation of Formula 32, $k_B$ can be determined by the above method. How to determine $\alpha$, k, $\varepsilon$ and $\tau$ will be discussed further below. $\Psi_F$ is dependent on the relationship between the position of the center of gravity G, position P1 and the position of the crankshaft 42. How to determine $\varphi_M$ will be described below with reference to FIG. 9.

The amplitude (magnitude) of the reciprocating component of the primary inertia force changes in synchronization with the magnitude of the couple of the rotational component of the primary inertia force and the inertia force of the balancer 48A. Thus, the following equation is established for the amplitude of the reciprocating component and the magnitude of the couple.
[Formula 33]

$$\mu \cdot (k \cdot \sin (\alpha_{90} + \Psi_F) - k_B \cdot \sin (\phi_M + \Psi_F))$$
$$= k_B \cdot \sin (\phi_M - \phi_B) \qquad (33)$$

Rearranging the above equation of Formula 33 gives the following equation.
[Formula 34]

$$k_B \cdot \sin (\phi_M + \Psi_F) + \frac{k_B}{\mu} \cdot \sin (\phi_M + \Psi_F + \beta)$$
$$= k \cdot \cos (\alpha + \tau + \Psi_F) \qquad (34)$$

Rearranging the above equation of Formula 34 and substituting the above equation of Formula 32 gives the following equation.
[Formula 35]

$$\sin (\phi_M + \Psi_F)$$
$$= \frac{k \{\mu \cdot \cos (\alpha + \tau + \Psi_F) + \sin \beta \cdot \sin (\alpha + \tau + \Psi_F)\}}{k_B \cdot (\mu + \cos \beta)} \qquad (35)$$

Due to the trigonometric function formula, the following relationship is established.
[Formula 36]

$$\tan (\phi_M + \Psi_F) = \frac{\sin (\phi_M + \Psi_F)}{\cos (\phi_M + \Psi_F)} \qquad (36)$$

Rearranging the above equation of Formula 36 gives the following equation.
[Formula 37]

$$\phi_M = -\Psi_F + \tan^{-1}\left(\frac{\sin(\phi_M + \Psi_F)}{\cos(\phi_M + \Psi_F)}\right) \qquad (37)$$

Substituting the above equation of Formula 32 and the equation of Formula 35 into the above equation of Formula 37 gives the following equation.
[Formula 38]

$$\phi_M = -\Psi_F$$
$$+ \tan^{-1}\left(\frac{\mu \cdot \cos(\alpha + \tau + \Psi_F) + \sin\beta \cdot \sin(\alpha + \tau + \Psi_F)}{-(\mu + \cos\beta) \cdot \sin(\alpha + \tau + \Psi_F)}\right)$$

$$(38)$$

From the above equation of Formula 38 and the equation of Formula 30, the following equation can be obtained.
[Formula 39]

$$\alpha_B = \tau - (\Psi_F + 90°)$$
$$+ \tan^{-1}\left(\frac{\mu \cdot \cos(\alpha + \tau + \Psi_F) + \sin\beta \cdot \sin(\alpha + \tau + \Psi_F)}{-(\mu + \cos\beta) \cdot \sin(\alpha + \tau + \Psi_F)}\right)$$

$$(39)$$

To determine the phase $\alpha$ and magnitude k of the crank balancer 42A from the direction $\chi$ of the major axis and the length of the long axis A described above, the formula of asymmetric crank balancing is suitably used. More specifically, by substituting into the following equation of Formula 40 the direction $\chi$ of the major axis determined by the above equation of Formula 19 and the value of the length of the long axis A determined by the equation of Formula 25, the phase $\alpha$ of the crank balancer 42A can be obtained. By substituting into the following equation of Formula 41 the direction $\chi$ of the major axis determined by the above equation of Formula 19 and the value of the length of the long axis A determined by the equation of Formula 25, the magnitude k of the crank balancer 42A can be obtained.
[Formula 40]

$$\alpha = -\tau + \tan^{-1}\left(\frac{C_y}{C_x}\right) \qquad (40)$$

[Formula 41]

$$k = \sqrt{C_x{}^2 + C_y{}^2} \qquad (41)$$

Here, $C_x$ and $C_y$ in the above equations of Formulas 40 and 41 are represented by the following equations.
[Formula 42]

$$C_x = (A - 0.5\varepsilon) \cdot \cos 2\chi - 0.5\varepsilon \qquad (42)$$

[Formula 43]

$$C_y = (A - 0.5\varepsilon) \cdot \sin 2\chi \qquad (43)$$

2. Reduction in Vibration Produced by Primary Inertia Couple caused by Lateral Pressure from Piston

The above description does not take into consideration the effects of the primary inertia couple due to the lateral pressure from the piston. The lateral pressure from the position is a force applied to the cylinder 36 by the piston 38 as the piston-crank mechanism 32 operates. The primary inertia couple due to the lateral pressure from the piston is the primary component of the excitation moment due to the lateral pressure from the piston. The description below takes into consideration the effects of the primary inertia couple due to the lateral pressure from the piston.

An offset engine reduces losses in the internal combustion engine compared with a non-offset engine. More specifically, the lateral pressure from the piston is reduced by reducing the angle of inclination of the connecting rod 40 (i.e. angle of inclination relative to the cylinder axis L1) at the time point at which the combustion pressure is at the maximum.

Efficiency is improved if the time point at which the combustion pressure is at the maximum is later than the top dead center of the position. Thus, reducing the angle of inclination of the connecting rod 40 after the top dead center of the piston contributes to efficiency improvements.

However, in the context of inertia force, the angle of inclination of the connecting rod at the time point at which the Inertia force is at the maximum must be taken into consideration. The primary inertia force (i.e. primary component of the inertia force) is at its maximum somewhat later than the top dead center of the piston; however, the secondary inertia force and inertia forces of higher degrees are at their maximum at the time of the top dead center of the crank (i.e. time point at which the crankpin 46 is located on straight line L3).

In the secondary component of the inertia couple, the primary inertia force is a main factor. On the other hand, in the primary component of the inertia couple (i.e. primary inertia couple), the secondary inertia force (i.e. secondary component of the inertia force) is a main factor. In an offset engine, the angle of inclination of the connecting rod 40 is increased at the time of the crank top dead center, i.e. at the time point at which the secondary inertia force is at its maximum, compared with a non-offset engine. As a result, in an offset engine, the phase of the primary inertia couple changes and the amplitude of the primary inertia couple increases compared with a non-offset engine.

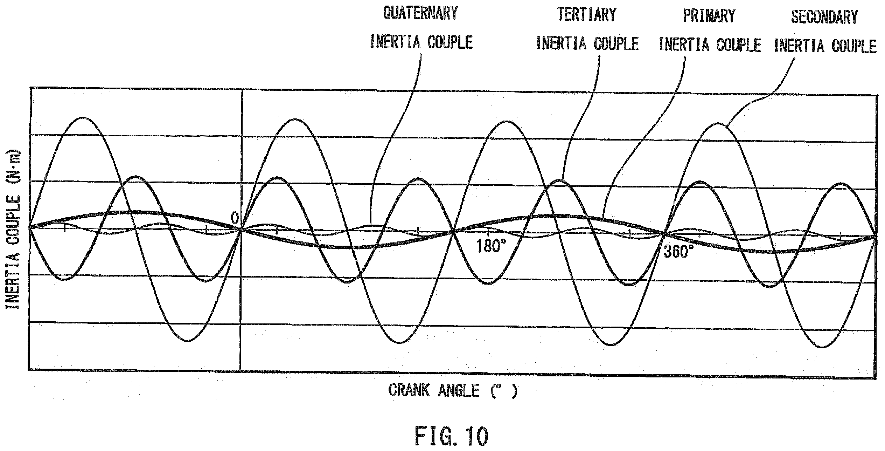

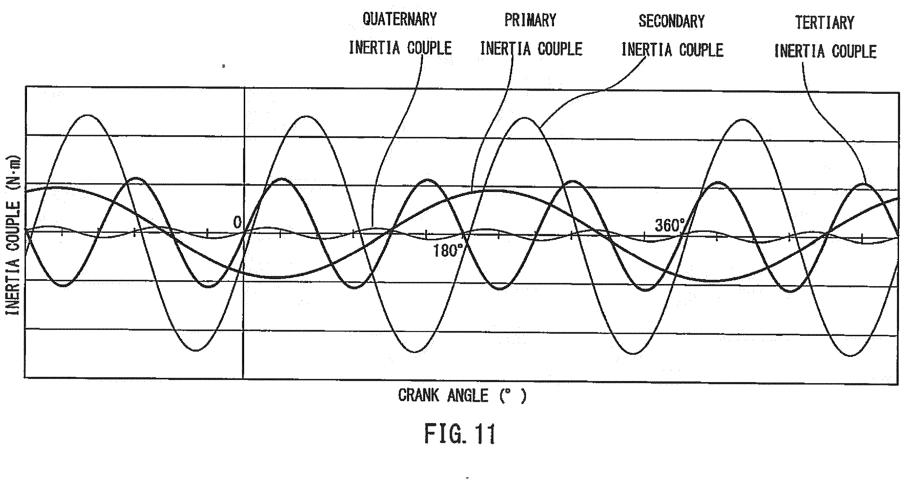

FIG. 10 illustrates the inertia couple due to the lateral pressure from the piston in a non-offset engine. FIG. 11 illustrates the inertia couple due to the lateral pressure from the piston in an offset engine where the offset quantity is about one sixth of the crank radius. As shown in FIGS. 10 and 11, in an-offset engine, the primary inertia couple due to the lateral pressure from the piston is larger than in a non-offset engine.

As discussed above, the engine 14 is an offset engine. Thus, in the engine 14, the primary inertia couple due to the lateral pressure from the piston is increased.

In the engine 14, the primary inertia couple due to the lateral pressure from the piston is reduced. A method of cancelling out the vibration acceleration at a target position while eliminating the effects of the primary inertia couple due to the lateral pressure from the piston will be described below.

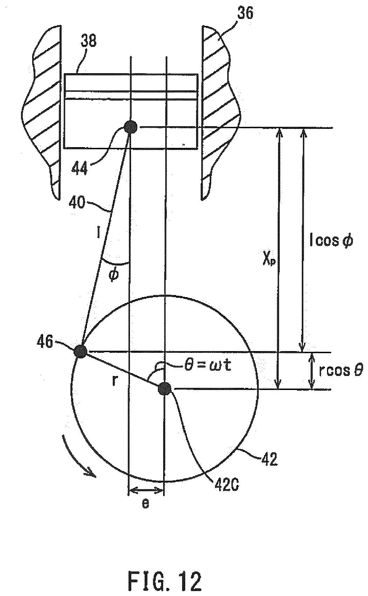

Referring to FIG. 12, the relationship illustrated by the following equation is established for the offset quantity e, the length of the connecting rod l, the crank radius r, the angle of crank rotation θ, and the swing angle of the connecting rod φ.
[Formula 44]

$$e + l \cdot \sin \phi = r \cdot \sin \theta \qquad (44)$$

Here, the offset quantity e is the sum of: (A) the offset quantity of the shaft center of the crankshaft relative to a straight line passing through the center of the cylinder as measured in the radial direction and extending in the axial direction of the cylinder; and (B) the offset quantity of the shaft center of the piston pin relative to this straight line. In the following description, the offset quantity e is the offset quantity of (A) only. Accordingly, FIG. 12 to which reference will be made illustrates the offset quantity of (A). In an engine in which the shaft center of the crankshaft is located on the cylinder axis, suitably the offset quantity e=0.

Rearranging the above equation of Formula 44 gives the following equation.
[Formula 45]

$$\sin \phi = \frac{r}{l} \cdot \sin \theta - \frac{e}{l} \qquad (45)$$

Due to the Pythagorean proposition, the following equation is established.
[Formula 46]

$$\sin^2\phi + \cos^2\phi = 1 \qquad (46)$$

From the above equations of Formulas 45 and 46, the following equation is derived.
[Formula 47]

$$\cos\phi = \sqrt{1 - \left(\frac{r}{l} \cdot \sin\theta - \frac{e}{l}\right)^2} \qquad (47)$$

The above equation of Formula 47 is developed using the binomial theorem under the following conditions.
[Formula 48]

$$(a+b)^n = \sum_{k=0}^{n} \frac{n!}{k!(n-k)!} \cdot a^{n-k} \cdot b^k$$

$$= a^n + n \cdot a^{n-1} \cdot b + \frac{n(n-1)}{2 \cdot 1} \cdot a^{n-2} \cdot b^2 + \cdots$$

$$(48)$$

[Formula 49]

$$a = 1 \qquad (49)$$

[Formula 50]

$$b = -\left(\frac{r}{l} \cdot \sin\theta - \frac{e}{l}\right)^2 \qquad (50)$$

[Formula 51]

$$n = \frac{1}{2} \qquad (51)$$

As a result, the above equation of Formula 47 becomes as follows.
[Formula 52]

$$\cos\phi = 1 - \frac{1}{2} \cdot \left(\frac{r}{l} \cdot \sin\theta - \frac{e}{l}\right)^2$$

$$- \frac{1}{8} \cdot \left(\frac{r}{l} \cdot \sin\theta - \frac{e}{l}\right)^4 + \cdots \qquad (52)$$

It is assumed that the above equation of Formula 52 ends with the third term and the second and third terms are developed and tidied up, which gives the following equation.
[Formula 53]

$$\cos \phi \approx 1 - \frac{1}{2} \cdot \left(\frac{e}{l}\right)^2 - \frac{1}{8} \cdot \left(\frac{e}{l}\right)^4 + \frac{r \cdot e}{l^2} \cdot \sin\theta$$

$$+ \frac{r \cdot e^3}{2\,l^4} \cdot \sin\theta - \frac{r^2}{2\,l^2} \cdot \sin^2\theta$$

$$- \frac{3\,r^2 \cdot e^2}{4\,l^4} \cdot \sin^2\theta$$

$$+ \frac{r^3 \cdot e}{2\,l^4} \cdot \sin^3\theta - \frac{r^4}{8\,l^4} \cdot \sin^4\theta \qquad (53)$$

Referring to FIG. 12, the displacement $x_p$ of the piston 38 is expressed by the following equation.
[Formula 54]

$$x_p = r \cdot \cos\theta + l \cdot \cos\phi \qquad (54)$$

Calculating the displacement $x_p$ of the piston 38 using the above equations of Formulas 53 and 54 gives the following equation.
[Formula 55]

$$x_p \approx r \cdot \left\{ \frac{l}{r} - \frac{e^2}{2\,l \cdot r} - \frac{e^4}{8\,l^3 \cdot r} + \cos\theta \right.$$

$$+ \left(\frac{e}{l} + \frac{e^3}{2\,l^3}\right) \cdot \sin\theta - \frac{r}{2\,l} \cdot \left(1 + \frac{3\,e^2}{2\,l^2}\right) \cdot \sin^2\theta$$

$$\left. + \frac{r^2 \cdot e}{2\,l^3} \cdot \sin^3\theta - \frac{r^3}{8\,l^3} \cdot \sin^4\theta \right\} \qquad (55)$$

Tidying up the above equation of Formula 55 using the product-sum formula of trigonometric functions gives the following equation.
[Formula 56]

$$x_p \approx r \cdot \left(\frac{1}{r} - \frac{e^2}{2\,l \cdot r} - \frac{e^4}{8\,l^3 \cdot r} - \frac{r}{4\,l} - \frac{3\,r \cdot e^2}{8\,l^3} - \frac{3\,r^3}{64\,l^3}\right)$$

$$+ r \cdot \sqrt{1 + \left(\frac{e}{l} + \frac{3\,r^2 \cdot e}{8\,l^3} + \frac{e^3}{2\,l^3}\right)^2}$$

$$\cdot \cos\left(\theta - \tan^{-1}\left(\frac{8\,l^2 \cdot e + 3\,r^2 \cdot e + 4\,e^3}{8\,l^3}\right)\right)$$

$$+ r \cdot \left(\frac{r}{4\,l} + \frac{r^3}{16\,l^3} + \frac{3\,r \cdot e^2}{8\,l^3}\right) \cdot \cos 2\theta - r$$

$$\cdot \frac{r^2 \cdot e}{8\,l^3} \cdot \sin 3\theta - r \cdot \frac{r^3}{64\,l^3} \cdot \cos 4\theta \qquad (56)$$

The velocity of the piston 38, $v_p$, may be determined by differentiating the displacement $x_p$ with respect to time. If $\theta = \omega t$ in the above equation of Formula 56, the velocity $v_p$ is represented by the following equation.
[Formula 57]

$$v_p \approx -r\,\omega \cdot \sqrt{1 + \left(\frac{e}{l} + \frac{3\,r^2 \cdot e}{8\,l^3} + \frac{e^3}{2\,l^3}\right)^2}$$

$$\cdot \sin\left(\omega t - \tan^{-1}\left(\frac{8\,l^2 \cdot e + 3\,r^2 \cdot e + 4\,e^3}{8\,l^3}\right)\right)$$

$$- r\,\omega \cdot \left(\frac{r}{2\,l} + \frac{r^3}{8\,l^3} + \frac{3\,r \cdot e^2}{4\,l^3}\right) \cdot \sin 2\omega t$$

$$- r\,\omega \cdot \frac{3\,r^2 \cdot e}{8\,l^3} \cdot \cos 3\omega t$$

$$+ r\,\omega \cdot \frac{r^3}{16\,l^3} \cdot \sin 4\omega t \qquad (57)$$

The acceleration of the piston 38, $a_p$, may be determined by differentiating the velocity $v_p$ with respect to time. Differentiating the above equation of Formula 57 with respect to time gives the following equation.
[Formula 58]

$$a_p \approx -r\omega^2 \cdot \sqrt{1 + \left(\frac{e}{l} + \frac{3r^2 \cdot e}{8l^3} + \frac{e^3}{2l^3}\right)^2}$$

$$\cdot \cos\left(\omega t - \tan^{-1}\left(\frac{8l^2 \cdot e + 3r^2 \cdot e + 4e^3}{8l^3}\right)\right)$$

$$-r\omega^2 \cdot \left(\frac{r}{l} + \frac{r^3}{4l^3} + \frac{3r \cdot e^2}{2l^3}\right) \cdot \cos 2\omega t$$

$$+r\omega^2 \cdot \frac{9r^2 \cdot e}{8l^3} \cdot \sin 3\omega t$$

$$+r\omega^2 \cdot \frac{r^3}{4l^3} \cdot \cos 4\omega t \qquad (58)$$

The inertia force is obtained by multiplying mass by acceleration. Based on the above equation of Formula 58, the inertia force due to the reciprocating motion mass is represented by the following equation.
[Formula 59]

$$\frac{F}{mr\omega^2} = \frac{-a_p}{r\omega^2} \approx \sqrt{1 + \left(\frac{e}{l} + \frac{3r^2 \cdot e}{8l^3} + \frac{e^3}{2l^3}\right)^2}$$

$$\cdot \cos\left(\omega t - \tan^{-1}\left(\frac{8l^2 \cdot e + 3r^2 \cdot e + 4e^3}{8l^3}\right)\right)$$

$$+ \left(\frac{r}{l} + \frac{r^3}{4l^3} + \frac{3r \cdot e^2}{2l^3}\right) \cdot \cos 2\omega t$$

$$-\frac{9r^2 \cdot e}{8l^3} \cdot \sin 3\omega t - \frac{r^3}{4l^3} \cdot \cos 4\omega t \qquad (59)$$

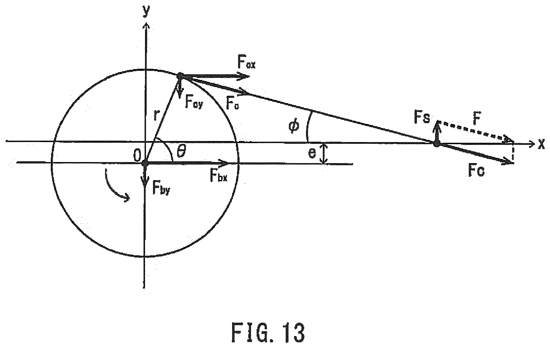

Referring to FIG. 13, the inertia force F acting on the position of the piston 38 (more specifically, the position of the piston pin 44) can be resolved into the force $F_c$ acting on the connecting rod 40 and the force $F_s$ acting on the side wall of the cylinder 36. The relationships illustrated by the following equations exist between the forces $F_c$ and F and between the forces $F_s$ and F.
[Formula 60]

[Formula 60]

$$F_c = \frac{F}{\cos\varphi} \qquad (60)$$

[Formula 61]

[Formula 61]

$$F_s = F_c \cdot \sin\phi = F \cdot \tan\phi \qquad (61)$$

The force acting on the crankshaft 42 can be resolved into a component in the x-direction, $F_{bx}$, and a component in the y-direction, $F_{by}$, as shown in FIG. 13. $F_{bx}$ and $F_{by}$ are determined by the following equations.

[Formula 62]

$$F_{bx} = F_{cx} = F_c \cdot \cos\phi = F \qquad (62)$$

[Formula 63]

$$F_{by} = F_{cy} = -F_c \cdot \sin\phi = -F \cdot \tan\phi = -F_s \qquad (63)$$

Referring to FIG. 13, the forces $F_s$ and $F_{by}$ form a couple. As will be apparent from the above equations of Formulas 62 and 63, the above couple is caused by the inertia force acting on the piston 38. Such an inertia force will be hereinafter referred to as inertia couple. The inertia couple $M_{rz}$ can be determined by the following equation.

[Formula 64]

$$M_{rz} = F \cdot \tan\phi \, (r \cdot \cos\theta + l \cdot \cos\phi) \qquad (64)$$

Tidying up the right side of the above equation of Formula 64 gives the following equation.

[Formula 65]

$$M_{rz} = F \cdot (r \cdot \cos\theta \cdot \sin\phi + l \cdot \sin\phi \cdot \cos\phi) \cdot \frac{1}{\cos\phi}$$

$$(65)$$

Referring to FIG. 13, the following equation is derived.

[Formula 66]

$$l \cdot \sin\phi = r \cdot \sin\theta - e \qquad (66)$$

Tidying up the above equation of Formula 65 using the above equation of Formula 66 gives the following equation.

[Formula 67]

$$M_{rz} = F \cdot r \cdot \frac{\sin(\theta + \phi)}{\cos\phi} - F \cdot e \qquad (67)$$

Referring to FIG. 13, the position $x_p$ of the piston 38 is represented by the above equation of Formula 54.

Differentiating the above position $x_p$ with respect to time t where $\theta = \omega t$ and $\varphi$ is a function of time t (i.e. $\varphi = \varphi(t)$) gives the following equation.

[Formula 68]

$$v_p = \frac{dx_p}{dt} = -(r \cdot \omega \cdot \sin\theta + l \cdot \phi' \cdot \sin\phi) \qquad (68)$$

Differentiating both sides of the above equation of Formula 66 with respect to time t gives the following equation.
[Formula 69]

$$l \cdot \phi' \cdot \cos\phi = r \cdot \omega \cdot \cos\theta \qquad (69)$$

Tidying up the above equation of Formula 69 gives the following equation.
[Formula 70]

$$l \cdot \phi' = \frac{r \cdot \omega \cdot \cos\theta}{\cos\phi} \qquad (70)$$

Tidying up the above equation of Formula 68 using the above equation of Formula 70 gives the following equation.
[Formula 71]

$$v_p = -r \cdot \omega \cdot \frac{\sin(\theta+\phi)}{\cos\phi} \qquad (71)$$

Tidying up the above equation of Formula 71 gives the following equation.
[Formula 72]

$$r \cdot \frac{\sin(\theta+\phi)}{\cos\phi} = -\frac{v_p}{\omega} \qquad (72)$$

Tidying up the above equation of Formula 67 using the above equation of Formula 72 gives the following equation.
[Formula 73]

$$M_{rz} = -F \cdot \left(\frac{v_p}{\omega} + e\right) \qquad (73)$$

Using the above equation of Formula 58 to express the inertia force $F_p$ due to the reciprocating motion mass gives the following equation.
[Formula 74]

$$F_p = -m \cdot a_p$$

$$\approx m \cdot r \cdot \omega^2 \cdot \sqrt{1 + \left(\frac{e}{l} + \frac{3 r^2 \cdot e}{8 l^3} + \frac{e^3}{2 l^3}\right)^2}$$

$$\cdot \cos\left(\omega t - \tan^{-1}\left(\frac{8 l^2 \cdot e + 3 r^2 \cdot e + 4 e^3}{8 l^3}\right)\right)$$

$$+ m \cdot r \cdot \omega^2 \cdot \left(\frac{r}{l} + \frac{r^3}{4 l^3} + \frac{3 r \cdot e^2}{2 l^3}\right) \cdot \cos 2\omega t$$

$$- m \cdot r \cdot \omega^2 \cdot \frac{9 r^2 \cdot e}{8 l^3} \cdot \sin 3\omega t$$

$$- m \cdot r \cdot \omega^2 \cdot \frac{r^3}{4 l^3} \cdot \cos 4\omega t \qquad (74)$$

The velocity $v_p$ of the piston 38 is expressed by the above equation of Formula 57.
The symbols are defined as follows.
[Formula 75]

$$\lambda = \frac{l}{r} \qquad (75)$$

[Formula 76]

$$\xi = \frac{e}{r} \qquad (76)$$

[Formula 77]

$$\varepsilon = \sqrt{1 + \left(\frac{e}{l} + \frac{3 r^2 \cdot e}{8 l^3} + \frac{e^3}{2 l^3}\right)^2} \qquad (77)$$

[Formula 78]

$$\tau = \tan^{-1}\left(\frac{8 l^2 \cdot e + 3 r^2 \cdot e + 4 e^3}{8 l^3}\right) \qquad (78)$$

[Formula 79]

$$\mu = \frac{r}{l} + \frac{r^3}{4\,l^3} + \frac{3\,r \cdot e^2}{2\,l^3} \qquad (79)$$

[Formula 80]

$$\eta = \frac{9\,r^2 \cdot e}{8\,l^3} \qquad (80)$$

The following relationship is established for $\varepsilon$ and $\tau$.
[Formula 81]

$$\varepsilon \cdot \cos \tau = 1 \qquad (81)$$

[Formula 82]

$$\varepsilon \cdot \sin \tau = \tan \tau = \sqrt{\varepsilon^2 - 1} = \frac{e}{l} + \frac{3\,r^2 \cdot e}{8\,l^3} + \frac{e^3}{2\,l^3} \qquad (82)$$

Tidying up the equation for the inertia couple $M_{rz}$ using the above equations of Formulas 75 to 82 gives the following equation.
[Formula 83]

$$\frac{M_{rz}}{m \cdot r^2 \cdot \omega^2} = -\frac{F}{m \cdot r^2 \cdot \omega^2} \left( \frac{v}{\omega} + e \right) = \frac{F}{m \cdot r \cdot \omega^2} \left( -\frac{e}{r} - \frac{v}{r \cdot \omega} \right)$$

$$\approx \{\varepsilon \cdot \cos(\omega t - \tau) + \mu \cdot \cos 2\omega t - \eta \cdot \sin 3\omega t$$

$$-\frac{1}{4\lambda^3} \cdot \cos 4\omega t\} \cdot \{-\xi + \varepsilon \cdot \sin(\omega t - \tau)$$

$$+\frac{\mu}{2} \cdot \sin 2\omega t + \frac{\eta}{3} \cdot \cos 3\omega t - \frac{1}{16\lambda^3} \cdot \sin 4\omega t\}$$

$$(83)$$

Developing the above equation of Formula 83 and tidying up using the product-sum formula of trigonometric functions gives the following equation.
[Formula 84]

$$\frac{M_{rz}}{m \cdot r^2 \cdot \omega^2} \approx -\frac{\varepsilon \cdot \mu}{4} \cdot \sin(\omega t + \tau)$$

$$- \left(\frac{\mu \cdot \eta}{12} + \frac{\eta}{96\lambda^3}\right) \cdot \cos \omega t - \varepsilon \cdot \xi \cdot \cos(\omega t - \tau)$$

$$+ \frac{\varepsilon^2}{2} \cdot \sin(2\omega t - 2\tau) + \frac{\mu}{32\lambda^3} \cdot \sin 2\omega t$$

$$- \frac{\varepsilon \cdot \eta}{3} \cdot \cos(2\omega t + \tau) - \xi \cdot \mu \cdot \cos 2\omega t$$

$$+ \frac{3\varepsilon \cdot \mu}{4} \cdot \sin(3\omega t - \tau) + \frac{3\varepsilon}{32\lambda^3} \cdot \sin(3\omega t + \tau)$$

$$+ \xi \cdot \eta \cdot \sin 3\omega t + \frac{\mu^2}{4} \cdot \sin 4\omega t$$

$$+ \frac{2\varepsilon \cdot \eta}{3} \cdot \cos(4\omega t - \tau) + \frac{\xi}{4\lambda^3} \cdot \cos 4\omega t$$

$$- \frac{5\varepsilon}{32\lambda^3} \cdot \sin(5\omega t - \tau) + \frac{5\mu \cdot \eta}{12} \cdot \cos 5\omega t$$

$$- \left(\frac{\eta^2}{6} + \frac{3\mu}{32\lambda^3}\right) \cdot \sin 6\omega t$$

$$- \frac{7\eta}{96\lambda^3} \cdot \cos 7\omega t + \frac{1}{128\lambda^6} \cdot \sin 8\omega t \qquad (84)$$

Expressing $\mu$ using $\lambda$ and $\xi$ gives the following equation.
[Formula 85]

$$\mu = \frac{1}{\lambda} + \frac{1}{4\lambda^3} + \frac{3\xi^2}{2\lambda^3} \qquad (85)$$

Expressing $\eta$ using $\lambda$ and $\xi$ gives the following equation.
[Formula 86]

$$\eta = \frac{9\xi}{8\lambda^3} \qquad (86)$$

The above equation of Formula 84 is tidied up using the above equations of Formulas 85 and 86. As a result, the primary component is expressed by the following equation.
[Formula 87]

$$\frac{M_{rz1}}{m \cdot r^2 \cdot \omega^2} \approx -\varepsilon \cdot \xi \cdot \cos(\omega t - \tau)$$

$$- \left(\frac{\varepsilon}{4\lambda} + \frac{\varepsilon}{16\lambda^3} + \frac{3\varepsilon \cdot \xi^2}{8\lambda^3}\right) \cdot \sin(\omega t + \tau)$$

$$- \left(\frac{3\xi}{32\lambda^4} + \frac{9\xi}{256\lambda^6} + \frac{9\xi^3}{64\lambda^6}\right) \cdot \cos\omega t \qquad (87)$$

The above equation of Formula 87 is tidied up using the trigonometric function formula to give the following equation.
[Formula 88]

$$\frac{M_{rz1}}{m \cdot r^2 \cdot \omega^2} \approx \left(-\varepsilon \cdot \xi \cdot \sin\tau - \left(\frac{\varepsilon}{4\lambda} + \frac{\varepsilon}{16\lambda^3}\right.\right.$$

$$\left.\left. + \frac{3\varepsilon \cdot \xi^2}{8\lambda^3}\right) \cdot \cos\tau\right) \cdot \sin\omega t$$

$$+ \left(-\varepsilon \cdot \xi \cdot \cos\tau - \left(\frac{\varepsilon}{4\lambda} + \frac{\varepsilon}{16\lambda^3} + \frac{3\varepsilon \cdot \xi^2}{8\lambda^3}\right) \cdot \sin\tau\right.$$

$$\left. + \left(\frac{3\xi}{32\lambda^4} + \frac{9\xi}{256\lambda^6} + \frac{9\xi^3}{64\lambda^6}\right)\right) \cdot \cos\omega t \qquad (88)$$

For example, $\lambda$ is set to 3 and $\xi$ is set to 0.5 and the above equation of Formula 88 is calculated. An actual calculation shows that there are coefficients whose absolute values are smaller than 0.0001 (0.01 %). For ease of calculation, the coefficients whose absolute values are smaller than 0.0001 (0.01 %) may be omitted to give the following simplified equation.
[Formula 89]

$$\frac{M_{rz1}}{m \cdot r^2 \cdot \omega^2} \approx$$

$$- \left[ \sqrt{ \left( \varepsilon \cdot \xi \cdot \sin\tau + \left( \frac{\varepsilon}{4\lambda} + \frac{\varepsilon}{16\lambda^3} + \frac{3\varepsilon \cdot \xi^2}{8\lambda^3} \right) \cdot \cos\tau \right)^2 + \left( \varepsilon \cdot \xi \cdot \cos\tau + \left( \frac{\varepsilon}{4\lambda} + \frac{\varepsilon}{16\lambda^3} + \frac{3\varepsilon \cdot \xi^2}{8\lambda^3} \right) \cdot \sin\tau + \frac{3\xi}{32\lambda^4} \right)^2 } \right.$$

$$\cdot \sin \left( \omega t + \tan^{-1} \left( \frac{\varepsilon \cdot \xi \cdot \cos\tau + \left( \frac{\varepsilon}{4\lambda} + \frac{\varepsilon}{16\lambda^3} + \frac{3\varepsilon \cdot \xi^2}{8\lambda^3} \right) \cdot \sin\tau + \frac{3\xi}{32\lambda^4}}{\varepsilon \cdot \xi \cdot \sin\tau + \left( \frac{\varepsilon}{4\lambda} + \frac{\varepsilon}{16\lambda^3} + \frac{3\varepsilon \cdot \xi^2}{8\lambda^3} \right) \cdot \cos\tau} \right) \right)$$

$$(89)$$

Rearranging the above equation of Formula 89 gives the following equation.
[Formula 90]

$$M_{rz1} \approx m \cdot r^2 \cdot \omega^2 \cdot A_M \cdot \sin (\omega t + \alpha_M) \qquad (90)$$

Here, $A_M$ and $\alpha_M$ in the above equation of Formula 90 are defined by the following equations.
[Formula 91]

$$A_M = \sqrt{ \left( \varepsilon \cdot \xi \cdot \sin\tau + \left( \frac{\varepsilon}{4\lambda} + \frac{\varepsilon}{16\lambda^3} + \frac{3\varepsilon \cdot \xi^2}{8\lambda^3} \right) \cdot \cos\tau \right)^2 + \left( \varepsilon \cdot \xi \cdot \cos\tau + \left( \frac{\varepsilon}{4\lambda} + \frac{\varepsilon}{16\lambda^3} + \frac{3\varepsilon \cdot \xi^2}{8\lambda^3} \right) \cdot \sin\tau + \frac{3\xi}{32\lambda^4} \right)^2 }$$

$$(91)$$

[Formula 92]

$$\alpha_M = \tan^{-1} \left( \frac{ -\varepsilon \cdot \xi \cdot \cos\tau - \left( \frac{\varepsilon}{4\lambda} + \frac{\varepsilon}{16\lambda^3} + \frac{3\varepsilon \cdot \xi^2}{8\lambda^3} \right) \cdot \sin\tau - \frac{3\xi}{32\lambda^4} }{ -\varepsilon \cdot \xi \cdot \sin\tau - \left( \frac{\varepsilon}{4\lambda} + \frac{\varepsilon}{16\lambda^3} + \frac{3\varepsilon \cdot \xi^2}{8\lambda^3} \right) \cdot \cos\tau } \right)$$

$$(92)$$

Here, $A_M$ is defined as the magnitude (amplitude) of the primary inertia couple due to the lateral pressure from the piston.

$\alpha_M$ is defined as the reference phase for the primary inertia couple due to the lateral pressure from the piston. This reference phase is relative to the phase of the crankshaft 42. The reference phase of the crankshaft 42 (0°) is the phase found when, as shown in FIG. 8, the shaft center 46C of the crankpin 46 is located on straight line L3 which is parallel to the cylinder axis L1 and passes through the shaft center 42C of the crankshaft 42 as viewed in the axial direction of the crankshaft 42. The reference position, which is associated with this reference phase, is one of the intersection points of a locus of the shaft center 46C of the crankpin 46 formed as the crankshaft 42 rotates (i.e. a perfect circle) and straight line L3, the one intersection point being the one closer to the piston 38 than the other one is.

Portions of the primary inertia force produced by the reciprocating motion mass are combined with portions of the inertia force produced by the crank balancer 42A to produce the rotational component of the primary inertia force acting on the crankshaft 42 (rotating in the direction opposite to that for the crankshaft 42). The rotational component produced is combined with portions of the inertia force due to the balancer 48A to generate a couple. At this time, the locus of the end point of the vector of the rotational component is perfectly circular. The magnitude of the rotational component is dependent on the magnitude of the crank balancer 42A added. The magnitude of the crank balancer 42A for generating a rotational component will be designated by $k_{M1}$. The magnitude of the couple generated is expressed by the following equation using the reciprocating motion mass m, the crank radius r, the angular velocity $\omega$ of the crankshaft 42, and the distance $L_B$ between the shaft center 42C of the crankshaft 42 and the shaft center 48C of the balancer shaft 48.

[Formula 93]

$$ m \cdot r \cdot \omega^2 \cdot k_{M1} \cdot L_B \qquad (9 3) $$

The following equation must be established in order that the above couple is in balance with the primary inertia couple due to the lateral pressure from the piston.

[Formula 94]

$$ m \cdot r^2 \cdot \omega^2 \cdot A_M = m \cdot r \cdot \omega^2 \cdot k_{M1} \cdot L_B \qquad (9 4) $$

Tidying up the above equation of Formula 94 gives the following equation (the same as Formula 1).

[Formula 95]

$$ k_{M1} = \frac{r \cdot A_M}{L_B} \qquad (1) $$

In a non-offset engine, the secondary and tertiary inertia couples due to the lateral pressure from the piston act as moments attempting to rotate the engine (or crankcase) in the direction of rotation of the crankshaft 42 when the piston is between the top dead center and bottom dead center. On the other hand, the primary inertia couple attempts to rotate the engine in the direction opposite to the direction of rotation of the crankshaft 42 when the piston is between the top dead center and bottom dead center.

At this time, the rotational component of the primary inertia force produced by combining portions of the primary inertia force due to the reciprocating motion mass and portions of the Inertia force due to the crank balancer 42A acts in the direction in which the cylinder axis L1 extends when the piston is at the top dead center. When the angle of rotation of the crankshaft 42 is +90°, it acts in the direction resulting from a rotation of 90° in the direction opposite to the direction of rotation of the crankshaft.

To counteract the primary inertia couple due to the lateral pressure from the piston by combining the rotational component of the above-described primary inertia force with the inertia force due to the balancer 48A, the balancer shaft 48 must be located on the cylinder axis L1 as viewed in the axial direction of the crankshaft 42.

In an offset engine, the reference phase of the primary inertia couple changes depending on the offset quantity. Accordingly, the position of the balancer shaft 48 must be decided depending on the offset quantity.

For example, it is assumed that the reference phase of the primary inertia couple is located near 240°. The amplitude of $\sin\theta$ is at its maximum when it is at 90° and 270°. As such, if the reference phase of the primary inertia couple is near 240°, the primary inertia couple is at its maximum when the crankshaft 42 has rotated by about 30° from the reference position.

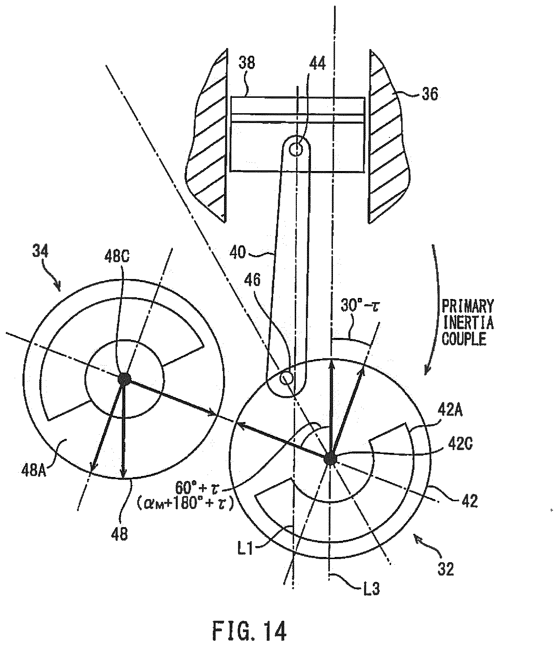

In an offset engine, the primary inertia force has a phase delay $\tau$. Thus, when the crankshaft 42 has rotated by 30° from the reference position, the primary inertia force of the engine 14 acts in the direction resulting from a rotation of 30°-$\tau$ in the direction opposite to the direction of rotation of the crankshaft 42 relative to the direction in which the cylinder axis L1 extends. As shown in FIG. 14, the position of the balancer 48 with the maximum couple in combination with this force is the position of 60°+τ from the reference position as viewed in the axial direction of the crankshaft 42.

As described above, the primary inertia couple is expressed by the equation of Formula 90. In this case, the optimum position of the balancer shaft 48 is expressed by the following equation. In the following equation, as viewed in the axial direction of the crankshaft 42, the reference position is the reference (0°) and the direction in which the crankshaft 42 rotates is positive. This is as shown in FIG. 3.
[Formula 96]

$$\alpha_M + 180° + \tau \qquad (96)$$

The position of the balancer shaft 48 is not limited to the optimum position expressed by the above equation of Formula 96. It is only required to be within ±30° relative to the optimum position.

If it is taken into consideration that the phase of the primary inertia force due to the reciprocating motion mass shifts by τ due to the crank offset, the phase $\alpha_{M1}$ of the crank balancer 42A needed to counteract the primary inertia couple due to the lateral pressure from the piston is expressed by the following equation (the same as Formula 2).
[Formula 97]

$$\alpha_{M1} = 180° - \tau \qquad (2)$$

If it is taken into consideration that the balancer shaft 48 rotates in the direction opposite to that for the crankshaft 42, the phase $\alpha_{BM1}$ of the balancer 48A needed to counteract the primary inertia couple due to the lateral pressure from the piston is expressed by the following equation (the same as Formula 3).
[Formula 98]

$$\alpha_{BM1} = 180° + \tau \qquad (3)$$

The component of the primary inertia force due to the reciprocating motion mass that corresponds to the magnitude of $2k_{M1}$ is used to counteract the primary inertia couple due to the lateral pressure from the piston. In an offset engine, the magnitude of the primary inertia force due to the reciprocating motion mass is expressed by the amplitude scale factor ε. The remaining primary inertia force $F_{IC}$ may be expressed by the following equation using this amplitude scale factor ε.
[Formula 99]

$$F_{IC} = \varepsilon - 2k_{M1} \qquad (99)$$

The theory for setting an instantaneous center of rotation for the engine as discussed above is applied to the primary inertia force expressed by the above equation of Formula 99. This will be described below.

$F_{IC}$ described above is part of the primary inertia force due to the reciprocating motion mass. Thus, $F_{IC}$ acts only in the axial direction of the cylinder 36.

$F_{IC}$ described above is combined with the inertia force due to the crank balancer 42A. At this time, the locus of the end point of the resultant-force vectors is elliptical. The relationship illustrated by the following equation is established between the length of the long axis $A_{IC}$ and the length of the short axis Bic of this ellipse.
[Formula 100]

$$F_{IC} = A_{IC} - B_{IC} \qquad (100)$$

In the theory for setting an instantaneous center of rotation for the engine described above, there is no change to the equations illustrating the positional relationship between the various points. Accordingly, the equations for χ, A' and B' can be used without modifications.

In the equation for A'+B' (Formula 23), ε is replaced by $F_{IC}$. This gives the following equation.
[Formula 101]

$$A' + B' = \frac{F_{IC}}{\sigma} \qquad (101)$$

Rearranging and tidying up the above equation of Formula 101 gives the following equation.
[Formula 102]

$$\sigma = \frac{F_{IC}}{A' + B'} = \frac{F_{IC}}{2\sqrt{(0.5 + \mu \cdot \cos\beta)^2 + (\mu \cdot \sin\beta)^2}} \qquad (102)$$

Thus, the length of the long axis $A_{IC}$ of the ellipse for the primary inertia force for setting an instantaneous center of rotation for the engine for $F_{IC}$ is expressed by the following equation.
[Formula 103]

$$A_{IC} = \sigma \cdot A'$$

$$= 0.5 F_{IC} + \frac{F_{IC}}{4\sqrt{(0.5 + \mu \cdot \cos\beta)^2 + (\mu \cdot \sin\beta)^2}}$$

$$(103)$$

The magnitude $k_{IC}$ and phase $\alpha_{IC}$ of the component in the crank balancer 42A that is used to set an instantaneous center of rotation for the engine is expressed by the following equations.
[Formula 104]

$$k_{IC} = \sqrt{C_x^2 + C_y^2} \qquad (104)$$

[Formula 105]

$$\alpha_{IC} = -\tau + \tan^{-1}\left(\frac{C_y}{C_x}\right) \qquad (105)$$

Here, $C_x$ and $C_y$ in the above equations of Formulas 104 and 105 are defined by the following equations.
[Formula 106]

$$C_x = (A_{IC} - 0.5 F_{IC}) \cdot \cos 2\chi - 0.5 F_{IC} \qquad (106)$$

[Formula 107]

$$C_y = (A_{IC} - 0.5 F_{IC}) \cdot \sin 2\chi \qquad (107)$$

The magnitude $k_{BIC}$ and phase $\alpha_{BIC}$ of the component in the balancer 48A that is used to set an instantaneous center of rotation for the engine are expressed by the following equations.
[Formula 108]

$$k_{BIC} = \frac{\mu \cdot F_{IC}}{2\sqrt{(0.5 + \mu \cdot \cos \beta)^2 + (\mu \cdot \sin \beta)^2}} \qquad (108)$$

[Formula 109]

$$\alpha_{BIC} = \tau - (\Psi_F + 90°)$$
$$+ \tan^{-1}\left(\frac{\mu \cdot \cos(\alpha_{IC} + \tau + \Psi_F) + \sin \beta \cdot \sin(\alpha_{IC} + \tau + \Psi_F)}{-(\mu + \cos \beta) \cdot \sin(\alpha_{IC} + \tau + \Psi_F)}\right)$$
$$(109)$$

To place the instantaneous center of rotation for the engine at an arbitrary position while counteracting the effects of the primary inertia couple due to the lateral pressure from the piston, the component of the crank balancer 42A and the component of the balancer 48A needed for these operations are suitably calculated by vector addition.

The magnitude $k_{total}$ of the crank balancer 42A for placing the instantaneous center of rotation for the engine at an arbitrary position while counteracting the effects of the primary inertia couple due to the lateral pressure from the piston is expressed by the following equation (the same as Formula 4).

[Formula 110]

$$k_{total} =$$
$$\sqrt{\left(k_{M1} \cdot \cos \alpha_{M1} + k_{IC} \cdot \cos \alpha_{IC}\right)^2 + \left(k_{M1} \cdot \sin \alpha_{M1} + k_{IC} \cdot \sin \alpha_{IC}\right)^2}$$
$$(4)$$

The phase $\alpha_{total}$ of the crank balancer 42A for placing the instantaneous center of rotation for the engine at an arbitrary position while counteracting the effects of the primary inertia couple due to the lateral pressure from the piston is expressed by the following equation (the same as Formula 5).

[Formula 111]

$$\alpha_{total} = \tan^{-1}\left(\frac{k_{M1} \cdot \sin \alpha_{M1} + k_{IC} \cdot \sin \alpha_{IC}}{k_{M1} \cdot \cos \alpha_{M1} + k_{IC} \cdot \cos \alpha_{IC}}\right) \qquad (5)$$

The magnitude $k_{Btotal}$ of the balancer 48A for setting the instantaneous center of rotation of the engine at an arbitrary position while counteracting the effects of the primary inertia couple due to the lateral pressure from the piston is expressed by the following equation (the same as Formula 6).

[Formula 112]

$$k_{Btotal} = \sqrt{\left(k_{BM1} \cdot \cos \alpha_{BM1} + k_{BIC} \cdot \cos \alpha_{BIC}\right)^2 + \left(k_{BM1} \cdot \sin \alpha_{BM1} + k_{BIC} \cdot \sin \alpha_{BIC}\right)^2} \qquad (6)$$

The phase $\alpha_{Btotal}$ of the balancer 48A for positioning the instantaneous center of rotation of the engine at an arbitrary position while counteracting the effects of the primary inertia couple due to the lateral pressure from the piston is expressed by the following equation (the same as Formula 7).

[Formula 113]

$$\alpha_{Btotal}=\tan^{-1}\left(\frac{k_{BM1}\cdot\sin\alpha_{BM1}+k_{BIC}\cdot\sin\alpha_{BIC}}{k_{BM1}\cdot\cos\alpha_{BM1}+k_{BIC}\cdot\cos\alpha_{BIC}}\right) \qquad (7)$$

In the engine 14, $k_{total}$, $\alpha_{total}$, $k_{Btotal}$ and $\alpha_{Btotal}$ are set as discussed above to position the instantaneous center of rotation of the engine at an arbitrary position while counteracting the effects of the primary inertia couple due to the lateral pressure from the piston.

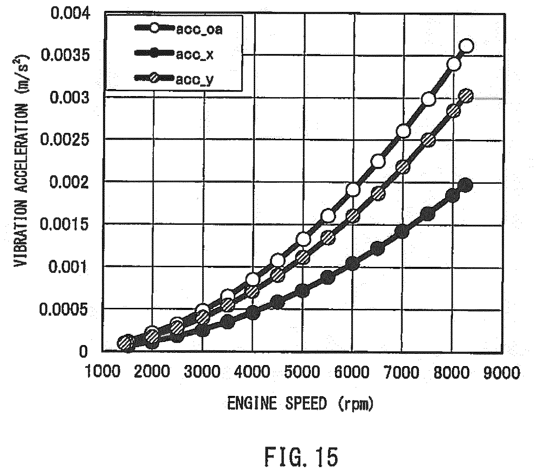

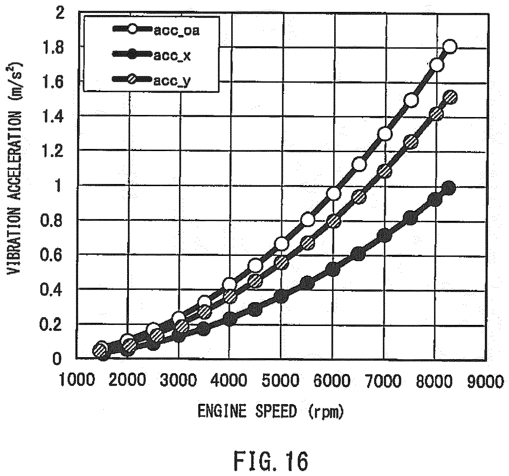

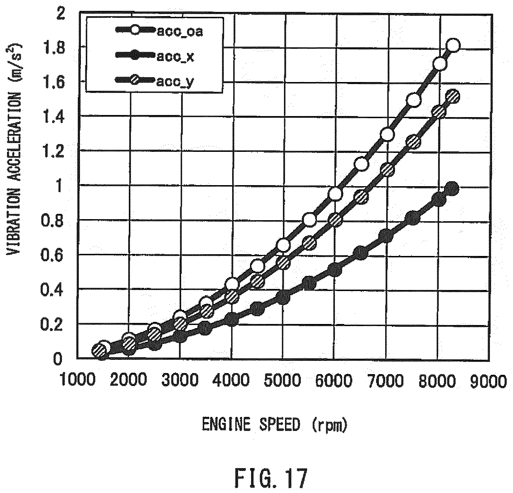

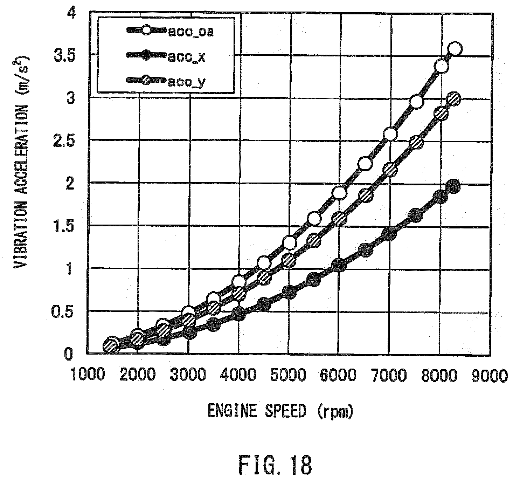

FIGS. 15 to 18 show the results of simulations of vibration acceleration at the position at which the engine 14 is attached to the vehicle body frame 12 (more specifically, pivot shaft 30). FIG. 15 shows the results of simulations conducted when the balancer shaft 48 was positioned at the optimum position (i.e. position resulting from a movement by 66.89° in the direction of crank rotation from the reference position) (Example 1). FIG. 16 shows the results of simulations conducted when the balancer shaft 48 was placed at the position resulting from a movement by 30° in the direction opposite to the direction of crank rotation from the optimum position (i.e. position resulting from a movement by 36.89° in the direction of crank rotation from the reference position) (Example 2). FIG. 17 shows the results of simulations conducted when the balancer shaft 48 was placed at the position resulting from a movement by 30° in the direction of crank rotation from the optimum position (i.e. position resulting from a movement by 96.89° in the direction of crank rotation from the reference position) (Example 3). FIG. 18 shows the results of simulations conducted when the balancer shaft 48 was placed at the position resulting from a movement by 103.8° in the direction opposite to the direction of crank rotation from the reference position (Comparative Example 1). That is, Comparative Example 1 did not take measures to counteract the primary inertia couple due to the lateral pressure from the piston. These simulation results were obtained for an association ratio $\lambda$ (l/r) of about 3.19 and an eccentricity ratio $\xi$ (e/r) of about 0.18.

As shown in FIGS. 15 to 18, it was found that Example 1 reduced vibration compared with Comparative Example 1. It was found that vibration was reduced compared with Comparative Example 1 even when the balancer shaft 48A was located at positions displaced by ±30° from the optimum position (i.e. Examples 2 and 3).

If the association ratio $\lambda$ (l/r) is in the range of 3 to 5 and the eccentricity ratio $\xi$ (e/r) is equal to or higher than 0.1, the optimum position of the balancer shaft 48A is in the range of 50° to 80° in the direction of crank rotation from the reference position. If it is considered that the reduction of vibration is achieved even when the balancer shaft 48A is located at a position displaced by ±30° from the optimum position, the above cases prove that the balancer shaft 48A may be suitably in the range of 20° to 110°. In embodiments of the invention, the association ratio $\lambda$ (l/r) is in the range of 3 to 5, the eccentricity ratio $\xi$ (e/r) is equal to or higher than 0.1, and the position of the balancer shaft 48A is in the range of 50° to 80° in the direction of crank rotation from the reference position.

[Example Application of First Embodiment]

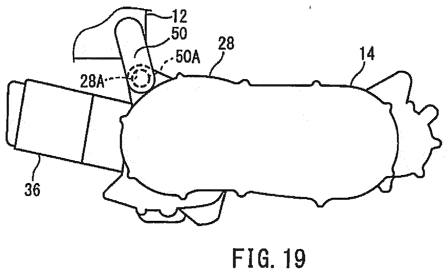

In the first embodiment, the engine 14 is directly attached to the vehicle body frame 12 by means of the pivot shaft 30; alternatively, for example, as shown in FIG. 19, the engine 14 may be attached to the vehicle body frame 12 by means of a link mechanism 50. In this case, a shaft 50A included in the link mechanism 50 is inserted into a hole 28A formed in the case 28 of the engine 14.

In the present example application, vibration of the engine 14 is further prevented from being transmitted to the vehicle body frame 12 if the angle of the link in the link mechanism 50 is set considering other exciting forces such as a secondary inertia force or fluctuations in propulsive force.

[Related Example]

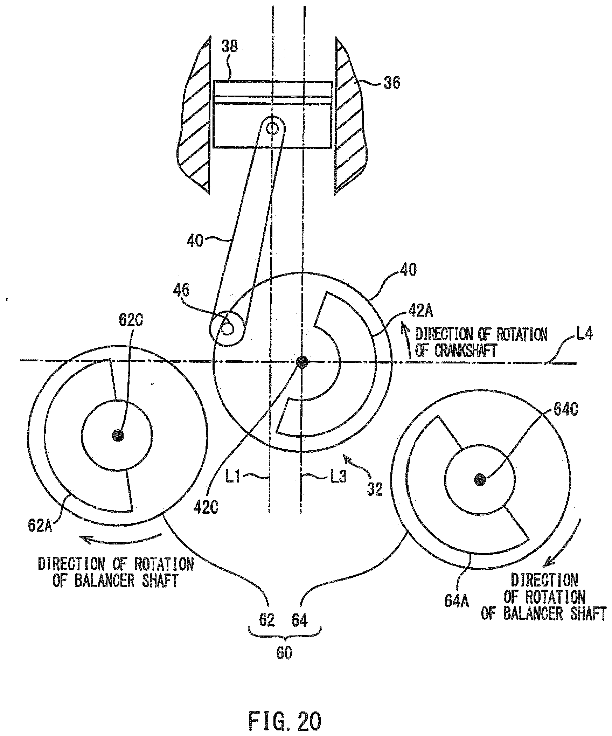

A balancer mechanism 60 employed in an engine in a related example that is not part of the present invention will be described with reference to FIG. 20. FIG. 20 is a conceptual diagram illustrating the relationship between the balancer mechanism 60 and a piston-crank mechanism 32.

The balancer mechanism 60 is a double-shaft balancer mechanism. The balancer mechanism 60 includes a balancer shaft 62 and a balancer shaft 64.

The balancer shaft 62 is located parallel to a crankshaft 42. The balancer shaft 62 has a shaft center 62C. The balancer shaft 62 is rotatable about the shaft center 62C. The balancer shaft 62 rotates in the direction opposite to that of the crankshaft 42. The balancer shaft 62 rotates at the same speed as the crankshaft 42. The balancer shaft 62 rotates together with the crankshaft 42 as a gear provided on the balancer shaft 62 engage with a gear provided on the crankshaft 42, for example. The balancer shaft 62 includes a balancer 62A. The balancer 62A generates an inertia force as the balancer shaft 62 rotates.

The balancer shaft 64 is located parallel to the crankshaft 42. The balancer shaft 64 has a shaft center 64C. The balancer shaft 64 is rotatable about the shaft center 64C. The balancer shaft 64 rotates in the direction opposite to that of the crankshaft 42. The balancer shaft 64 rotates at the same speed as the crankshaft 42. The balancer shaft 64 rotates together with the crankshaft 42 as a gear provided on the balancer shaft 64 engage with a gear provided on the crankshaft 42, for example. The balancer shaft 64 includes a balancer 64A. The balancer 64A generates an inertia force as the balancer shaft 64 rotates.

As viewed in the axial direction of the crankshaft 42, the balancer shaft 62 is located on that side of straight line L3 which is opposite to the side with the balancer shaft 64, straight line L3 passing through the shaft center 42C of the crankshaft 42 and being parallel to the cylinder axis L1. As viewed in the axial direction of the crankshaft 42, the balancer shafts 62 and 64 are located on that side of straight line L4 which is opposite to the side with the piston 38, straight line L4 passing through the shaft center 42C of the crankshaft 42 and being perpendicular to straight line L3.

The locus of the vector of the primary inertia force generated as the piston-crank mechanism 32 operates is perfectly circular.

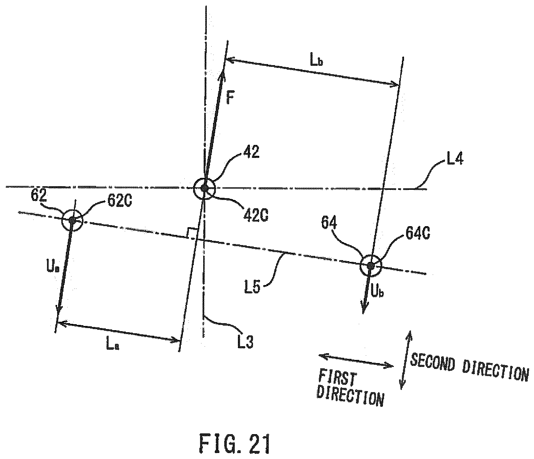

In the related example, the inertia force generated as the balancer mechanism 60 operates is used to reduce vibration generated by the primary inertia couple caused by the lateral pressure from the piston. Settings for the balancer mechanism 60 to provide the above effects will be described with reference to FIGS. 21 to 23.

Referring to FIG. 21, settings for counteracting the vibration generated by the primary inertia force F generated as the piston-crank mechanism 32 operates will be described. To counteract the vibration generated by the primary inertia force F, the primary inertia force F, the inertia force $U_a$ produced by the balancer 62A, and the inertia force $U_b$ produced by the balancer 64A suitably satisfy the following relationship.

[Formula 114]

$$U_a + U_b = F \qquad (110)$$

[Formula 115]

$$U_a \times L_a = U_b \times L_b \qquad (111)$$

Here, $L_a$ is the distance between the shaft center 42C of the crankshaft 42 and the shaft center 62C of the balancer shaft 62 as measured in the direction in which straight line L5 which connects the shaft center 62C of the balancer shaft 62 with the shaft center 64C of the balancer shaft 64 extends (i.e. first direction). $L_b$ is the distance between the shaft center 42C of the crankshaft 42 and the shaft center 64C of the balancer shaft 64 as measured in the first direction. When the primary inertia force F acts in the direction perpendicular to straight line L5 which connects the shaft center 62C of the balancer shaft 62 with the shaft center 64C of the balancer shaft 64 (i.e. second direction), then, the inertia forces $U_a$ and $U_b$ act in the direction opposite to that of the primary inertia force F.

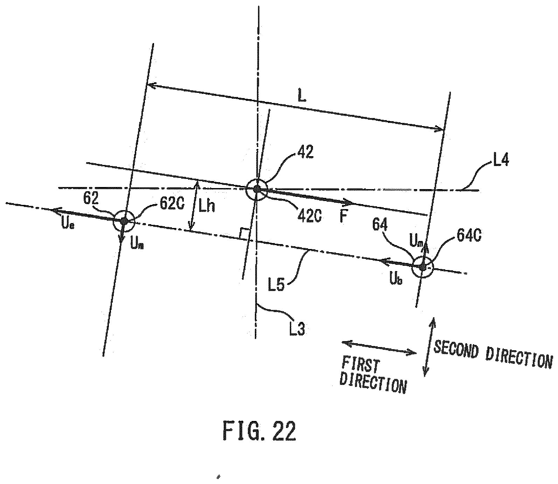

Referring to FIG. 22, settings for counteracting a pitch moment will be described. A pitch moment is a moment rotating about the shaft center 42C of the crankshaft 42, generated by interactions of the primary inertia force F acting on the crankshaft 42, the inertia force $U_a$ acting on the balancer shaft 62 and the inertia force $U_b$ acting on the balancer shaft 64. To counteract a pitch moment, the following equation is suitably satisfied.

[Formula 116]

$$U_m \times L = F \times L_h \qquad (112)$$

Here, $U_m$ is the inertia force having the phase and magnitude that counteract the pitch moment. When the primary inertia force F acts in the first direction, $U_m$ acts in the direction that is perpendicular to straight line L5 which connects the shaft center 62C of the balancer shaft 62 with the shaft center 64C of the balancer shaft 64 and that counteracts the moment produced by F and $U_a + U_b$. L is the distance between the shaft center 62C of the balancer shaft 62 and the shaft center 64C of the balancer shaft 64. $L_h$ is the distance between the shaft center 42C of the crankshaft 42 and the shaft center 62C of the balancer shaft 62 (or the shaft center 64C of the balancer shaft 64) as measured in the second direction.

The magnitude and phase of the balancer 62A is suitably decided by combining $U_a$ and $U_m$. Similarly, the magnitude and phase of the balancer 64A is suitably decided by combining $U_b$ and $U_m$.

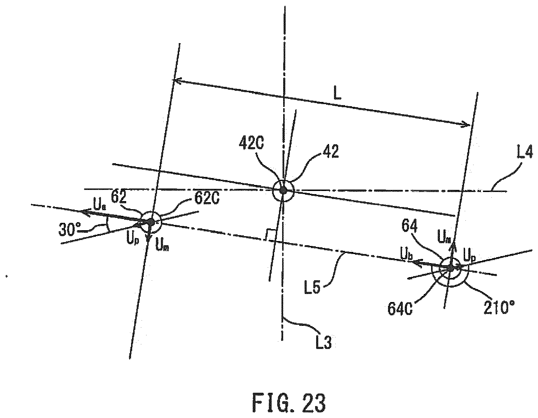

Referring to FIG. 23, settings for counteracting the primary component of the excitation moment due to the lateral pressure from the piston (i.e. primary inertia couple) will be described. To counteract the primary inertia couple due to the lateral pressure from the piston, the following equation is suitably satisfied.

[Formula 117]

$$U_P \times L = M_P \qquad (113)$$

Here, $M_p$ is the magnitude of the primary inertia couple due to the lateral pressure from the piston. $U_p$ is the inertia force having the magnitude and phase that counteract the primary inertia couple due to the lateral pressure from the piston.

In an offset engine in which the primary inertia couple due to the lateral pressure from the piston is at its maximum when the piston is at a position of 30° after the top dead center (i.e. the piston has advanced 30° from the top dead center), the phase of $U_p$ in the balancer shaft 62 is an advancement of 30° relative to $U_a$ in the direction of crank rotation and the phase of $U_p$ in the balancer shaft 64 is an advancement of 210° relative to $U_b$ in the direction of crank rotation.

In an engine with no crank offset, $U_p$ has the phase that produces a moment in the direction of crank rotation when the piston is at the position of 90° after the top dead center (that is, the piston has advanced 90° from the top dead center), that is, the same phase as $U_m$.

The magnitude and phase of the balancer 62A is suitably decided by combining $U_a$, $U_m$ and $U_p$. Similarly, the magnitude and phase of the balancer 64A is suitably decided by combining $U_b$, $U_m$ and $U_p$.

[Example Application of Related Example]

In the related example, the balancer shaft 64 rotates in the direction opposite to that of the crankshaft 42; alternatively, for example, the balancer shaft 64 may rotate in the same direction as the crankshaft 42. For example, the rotation of the crankshaft 42 may be transmitted to the balancer shaft 64 by means of a chain such that the balancer shaft 54 rotates in the same direction as the crankshaft 42. If the balancer shaft 64 rotates in the same direction as the crankshaft 42, the crank balancer 42A may have any magnitude and phase. An implementation without a crank balancer 42A (i.e. the crank balancer 42A accounts for 0 %) will be described below. If no crank balancer 42A is provided, the locus of the vector of the primary inertia force F is not in the shape of a circle, but in the shape of a straight line parallel to the cylinder axis.

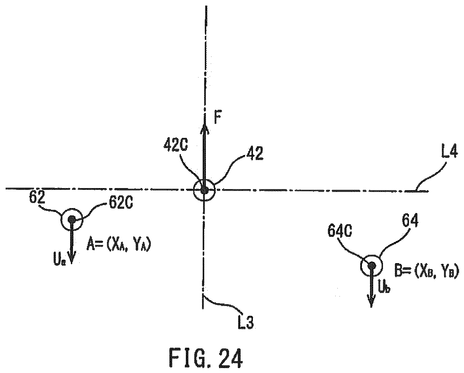

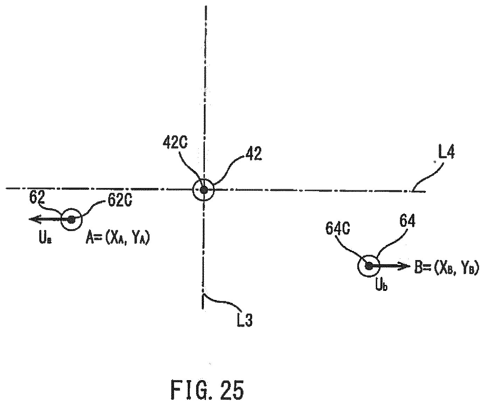

In the present example application, the inertia force generated as the balancer mechanism operates is used to reduce vibration generated by the primary inertia couple caused by the lateral pressure from the piston. Settings for the balancer mechanism in the above implementation will be described with reference to FIGS. 24 and 25.

Settings for counteracting vibration caused by the primary inertia force F generated as the piston-crank mechanism 32 operates will be described with reference to FIG. 24. To counteract vibration generated by the primary inertia force F, the inertia force $U_a$ produced by the balancer 62A and the inertia force $U_b$ produced by the balancer 64A suitably satisfy the following relationship.

[Formula 118]

$$U_a + U_b = A \qquad (114)$$

[Formula 119]

$$U_a - U_b = B \qquad (115)$$

Here, A is the length of the long axis of the primary inertia force ellipse (i.e. locus of the end point of the vector of the primary inertia force F). B is the length of the short axis of the primary inertia force ellipse (i.e. locus of the end point of the vector of the primary inertia force F). When the crank balancer accounts for 0 %, then B=0, and thus the following relationship is established.

[Formula 120]

$$U_a = U_b \qquad (116)$$

Settings for counteracting the primary excitation moment due to the lateral pressure from the piston (i.e. primary inertia couple) will be described with reference to FIG. 25. If, in an offset engine, the primary inertia couple due to the lateral pressure from the piston is at the maximum when the piston is at the position of 30° after the top dead center, the following relationships are suitably satisfied.

[Formula 121]

$$-x_A - x_B = M \cdot \cos(30°)/U_a \qquad (117)$$

[Formula 122]

$$-y_A - y_B = M \cdot \sin(30°)/U_a \qquad (118)$$

Here, M is the magnitude of the primary excitation moment due to the lateral pressure from the piston (i.e. primary inertia couple). XA is the position of the balancer shaft 62 as measured in the x-direction where the shaft center 42C of the crankshaft 42 forms the origin. $Y_A$ is the position of the balancer shaft 62 as measured in the y-direction where the shaft center 42C of the crankshaft 42 forms the origin. $X_B$ is the position of the balancer shaft 64 as measured in the x-direction where the shaft center 42C of the crankshaft 42 forms the origin. $Y_B$ is the position of the balancer shaft 64 as measured in the y-direction where the shaft center 42C of the crankshaft 42 forms the origin. The x-direction is the direction perpendicular to straight line L3 (i.e. direction parallel to straight line L4). The y-direction is the direction perpendicular to straight line L4 (i.e. direction parallel to straight line L3).

In a non-offset engine, the excitation moment due to the lateral pressure from the piston is at the maximum when the piston is near 90° after the top dead center. In a non-offset engine, the following relationship is suitably established.

[Formula 123]

$$x_A + x_B = 0 \qquad (119)$$

[Formula 124]

$$y_A - y_B = M/U_a \qquad (120)$$

Although embodiments of the present invention have been described, these embodiments are merely examples for carrying out the present invention. Therefore, the present invention is not limited to the above-illustrated embodiments, and the above-illustrated embodiments may be modified appropriately without departing from the scope of the invention, which is defined by the claims.

[Formula 1]

$$k_{M1} = \frac{r \cdot \Lambda_M}{L_B} \qquad (1)$$

[Formula 2]

$$\alpha_{M1} = 180° - \tau \qquad (2)$$

[Formula 3]

$$\alpha_{BM1} = 180° + \tau \qquad (3)$$

[Formula 4]

$$k_{total} = \sqrt{(k_{M1} \cdot \cos\alpha_{M1} + k_{IC} \cdot \cos\alpha_{IC})^2 + (k_{M1} \cdot \sin\alpha_{M1} + k_{IC} \cdot \sin\alpha_{IC})^2} \qquad (4)$$

[Formula 5]

$$\alpha_{total}=\tan^{-1}\left(\frac{k_{M1}\cdot\sin\alpha_{M1}+k_{IC}\cdot\sin\alpha_{IC}}{k_{M1}\cdot\cos\alpha_{M1}+k_{IC}\cdot\cos\alpha_{IC}}\right) \qquad (5)$$

[Formula 6]

$$k_{Btotal}=\sqrt{(k_{BM1}\cdot\cos\alpha_{BM1}+k_{BIC}\cdot\cos\alpha_{BIC})^2+(k_{BM1}\cdot\sin\alpha_{BM1}+k_{BIC}\cdot\sin\alpha_{BIC})^2} \qquad (6)$$

[Formula 7]

$$\alpha_{Btotal}=\tan^{-1}\left(\frac{k_{BM1}\cdot\sin\alpha_{BM1}+k_{BIC}\cdot\sin\alpha_{BIC}}{k_{BM1}\cdot\cos\alpha_{BM1}+k_{BIC}\cdot\cos\alpha_{BIC}}\right) \qquad (7)$$

[Formula 8]

$$F_1=M\cdot a_m=M\cdot\frac{F\cdot k_B\cdot L_B\cdot L_P}{I}\cdot\cos\theta_C \qquad (8)$$

[Formula 9]

$$a_r=F\cdot\sigma\cdot\cos\theta_c\left(\frac{1}{M}+\frac{L_C\cdot L_P}{I}\right)=F\cdot\sigma\cdot\cos\theta_c\left(\frac{I+M\cdot L_C\cdot L_P}{I\cdot M}\right) \qquad (9)$$

[Formula 10]

$$a_m=a_r \qquad (10)$$

[Formula 11]

$$\mu=\frac{k_B}{\sigma}=\frac{I+M\cdot L_C\cdot L_P}{M\cdot L_B\cdot L_P} \qquad (11)$$

[Formula 12]

$$\beta=360°-\Psi_B \qquad (12)$$

[Formula 13]

$$\chi=0.5\tan^{-1}\left(\frac{k\cdot\sin(\alpha+\tau)}{0.5\varepsilon+k\cos(\alpha+\tau)}\right) \qquad (13)$$

[Formula 14]

$$A=0.5\varepsilon+\sqrt{(0.5\varepsilon+k\cdot\cos(\alpha+\tau))^2+(k\cdot\sin(\alpha+\tau))^2} \qquad (14)$$

[Formula 15]

$$B = -0.5\varepsilon + \sqrt{(0.5\varepsilon + k \cdot \cos(\alpha + \tau))^2 + (k \cdot \sin(\alpha + \tau))^2} \qquad (15)$$

[Formula 16]

$$k = \frac{m_w \cdot r_w}{m_r \cdot r} \qquad (16)$$

[Formula 17]

$$\eta = 0.5\tan^{-1}\left(\frac{\mu \cdot \sin\beta}{0.5 + \mu\cos\beta}\right) \qquad (17)$$

[Formula 18]

$$\Psi_F + \chi + \eta = 90° \qquad (18)$$

[Formula 19]

$$\chi = 90° - (\eta + \Psi_F) \qquad (19)$$

[Formula 20]

$$A' = \frac{A}{\sigma} = 0.5 + \sqrt{(0.5 + \mu \cdot \cos\beta)^2 + (\mu \cdot \sin\beta)^2} \qquad (20)$$

[Formula 21]

$$B' = \frac{(-B)}{\sigma} = -0.5 + \sqrt{(0.5 + \mu \cdot \cos\beta)^2 + (\mu \cdot \sin\beta)^2} \qquad (21)$$

[Formula 22]

$$A - B = \varepsilon \qquad (22)$$

[Formula 23]

$$A' + B' = \frac{A}{\sigma} + \frac{(-B)}{\sigma} = \frac{(A-B)}{\sigma} = \frac{\varepsilon}{\sigma} \qquad (23)$$

[Formula 24]

$$\sigma = \frac{\varepsilon}{A' + B'} = \frac{\varepsilon}{2\sqrt{(0.5 + \mu \cdot \cos\beta)^2 + (\mu \cdot \sin\beta)^2}} \qquad (24)$$

[Formula 25]

$$A = \sigma A' = 0.5\varepsilon + \frac{\varepsilon}{4\sqrt{(0.5 + \mu \cdot \cos\beta)^2 + (\mu \cdot \sin\beta)^2}} \qquad (25)$$

[Formula 26]

$$k_B = \frac{\mu \cdot \varepsilon}{2\sqrt{(0.5 + \mu \cdot \cos\beta)^2 + (\mu \cdot \sin\beta)^2}} \qquad (26)$$

[Formula 27]

$$\alpha_{90} = \alpha + \tau + 90° \qquad (27)$$

[Formula 28]

$$\alpha_{B90} = \phi_M - 180° \qquad (28)$$

[Formula 29]

$$\alpha_B = \alpha_{B90} + \tau + 90° \qquad (29)$$

[Formula 30]

$$\alpha_B = \phi_M + \tau - 90° \qquad (30)$$

[Formula 31]

$$k \cdot \cos(\alpha_{90} + \Psi_F) = k_B \cdot \cos(\phi_M + \Psi_F) \qquad (31)$$

[Formula 32]

$$\cos(\phi_M + \Psi_F) = \frac{-k}{k_B} \cdot \sin(\alpha + \tau + \Psi_F) \qquad (32)$$

[Formula 33]

$$\mu \cdot (k \cdot \sin(\alpha_{90} + \Psi_F) - k_B \cdot \sin(\phi_M + \Psi_F)) = k_B \cdot \sin(\phi_M - \phi_B) \qquad (33)$$

[Formula 34]

$$k_B \cdot \sin(\phi_M + \Psi_F) + \frac{k_B}{\mu} \cdot \sin(\phi_M + \Psi_F + \beta) = k \cdot \cos(\alpha + \tau + \Psi_F) \qquad (34)$$

[Formula 35]

$$\sin(\phi_M + \Psi_F) = \frac{k\{\mu \cdot \cos(\alpha + \tau + \Psi_F) + \sin\beta \cdot \sin(\alpha + \tau + \Psi_F)\}}{k_B \cdot (\mu + \cos\beta)} \quad (35)$$

[Formula 36]

$$\tan(\phi_M + \Psi_F) = \frac{\sin(\phi_M + \Psi_F)}{\cos(\phi_M + \Psi_F)} \quad (36)$$

[Formula 37]

$$\phi_M = -\Psi_F + \tan^{-1}\left(\frac{\sin(\phi_M + \Psi_F)}{\cos(\phi_M + \Psi_F)}\right) \quad (37)$$

[Formula 38]

$$\phi_M = -\Psi_F + \tan^{-1}\left(\frac{\mu \cdot \cos(\alpha + \tau + \Psi_F) + \sin\beta \cdot \sin(\alpha + \tau + \Psi_F)}{-(\mu + \cos\beta) \cdot \sin(\alpha + \tau + \Psi_F)}\right) \quad (38)$$

[Formula 39]

$$\alpha_B = \tau - (\Psi_F + 90°) + \tan^{-1}\left(\frac{\mu \cdot \cos(\alpha + \tau + \Psi_F) + \sin\beta \cdot \sin(\alpha + \tau + \Psi_F)}{-(\mu + \cos\beta) \cdot \sin(\alpha + \tau + \Psi_F)}\right) \quad (39)$$

[Formula 40]

$$\alpha = -\tau + \tan^{-1}\left(\frac{C_y}{C_x}\right) \quad (40)$$

[Formula 41]

$$k = \sqrt{C_x^2 + C_y^2} \quad (41)$$

[Formula 42]

$$C_x = (A - 0.5\varepsilon) \cdot \cos 2\chi - 0.5\varepsilon \quad (42)$$

[Formula 43]

$$C_y = (A - 0.5\varepsilon) \cdot \sin 2\chi \quad (43)$$

[Formula 44]

$$e + l \cdot \sin\phi = r \cdot \sin\theta \qquad (44)$$

[Formula 45]

$$\sin\phi = \frac{r}{l} \cdot \sin\theta - \frac{e}{l} \qquad (45)$$

[Formula 46]

$$\sin^2\phi + \cos^2\phi = 1 \qquad (46)$$

[Formula 47]

$$\cos\phi = \sqrt{1 - \left(\frac{r}{l} \cdot \sin\theta - \frac{e}{l}\right)^2} \qquad (47)$$

[Formula 48]

$$(a+b)^n = \sum_{k=0}^{n} \frac{n!}{k!(n-k)!} \cdot a^{n-k} \cdot b^k = a^n + n \cdot a^{n-1} \cdot b + \frac{n(n-1)}{2 \cdot 1} \cdot a^{n-2} \cdot b^2 + \cdots \qquad (48)$$

[Formula 49]

$$a = 1 \qquad (49)$$

[Formula 50]

$$b = -\left(\frac{r}{l} \cdot \sin\theta - \frac{e}{l}\right)^2 \qquad (50)$$

[Formula 51]

$$n = \frac{1}{2} \qquad (51)$$

[Formula 52]

$$\cos\phi = 1 - \frac{1}{2} \cdot \left(\frac{r}{l} \cdot \sin\theta - \frac{e}{l}\right)^2 - \frac{1}{8} \cdot \left(\frac{r}{l} \cdot \sin\theta - \frac{e}{l}\right)^4 + \cdots \qquad (52)$$

[Formula 53]

$$\cos \phi \approx 1 - \frac{1}{2} \cdot \left(\frac{e}{l}\right)^2 - \frac{1}{8} \cdot \left(\frac{e}{l}\right)^4 + \frac{r \cdot e}{l^2} \cdot \sin\theta + \frac{r \cdot e^3}{2 l^4} \cdot \sin\theta - \frac{r^2}{2 l^2} \cdot \sin^2\theta$$

$$- \frac{3 r^2 \cdot e^2}{4 l^4} \cdot \sin^2\theta + \frac{r^3 \cdot e}{2 l^4} \cdot \sin^3\theta - \frac{r^4}{8 l^4} \cdot \sin^4\theta \qquad (53)$$

[Formula 54]

$$x_p = r \cdot \cos\theta + l \cdot \cos\phi \qquad (54)$$

[Formula 55]

$$x_p \approx r \cdot \left\{ \frac{l}{r} - \frac{e^2}{2 l \cdot r} - \frac{e^4}{8 l^3 \cdot r} + \cos\theta + \left(\frac{e}{l} + \frac{e^3}{2 l^3}\right) \cdot \sin\theta - \frac{r}{2 l} \cdot \left(1 + \frac{3 e^2}{2 l^2}\right) \cdot \sin^2\theta \right.$$

$$\left. + \frac{r^2 \cdot e}{2 l^3} \cdot \sin^3\theta - \frac{r^3}{8 l^3} \cdot \sin^4\theta \right\} \qquad (55)$$

[Formula 56]

$$x_p \approx r \cdot \left(\frac{l}{r} - \frac{e^2}{2 l \cdot r} - \frac{e^4}{8 l^3 \cdot r} - \frac{r}{4 l} - \frac{3 r \cdot e^2}{8 l^3} - \frac{3 r^3}{64 l^3}\right)$$

$$+ r \cdot \sqrt{1 + \left(\frac{e}{l} + \frac{3 r^2 \cdot e}{8 l^3} + \frac{e^3}{2 l^3}\right)^2} \cdot \cos\left(\theta - \tan^{-1}\left(\frac{8 l^2 \cdot e + 3 r^2 \cdot e + 4 e^3}{8 l^3}\right)\right)$$

$$+ r \cdot \left(\frac{r}{4 l} + \frac{r^3}{16 l^3} + \frac{3 r \cdot e^2}{8 l^3}\right) \cdot \cos 2\theta - r \cdot \frac{r^2 \cdot e}{8 l^3} \cdot \sin 3\theta - r \cdot \frac{r^3}{64 l^3} \cdot \cos 4\theta \qquad (56)$$

[Formula 57]

$$v_p \approx - r \omega \cdot \sqrt{1 + \left(\frac{e}{l} + \frac{3 r^2 \cdot e}{8 l^3} + \frac{e^3}{2 l^3}\right)^2} \cdot \sin\left(\omega t - \tan^{-1}\left(\frac{8 l^2 \cdot e + 3 r^2 \cdot e + 4 e^3}{8 l^3}\right)\right)$$

$$- r \omega \cdot \left(\frac{r}{2 l} + \frac{r^3}{8 l^3} + \frac{3 r \cdot e^2}{4 l^3}\right) \cdot \sin 2\omega t$$

$$- r \omega \cdot \frac{3 r^2 \cdot e}{8 l^3} \cdot \cos 3\omega t + r \omega \cdot \frac{r^3}{16 l^3} \cdot \sin 4\omega t \qquad (57)$$

[Formula 58]

$$a_p \approx - r \omega^2 \cdot \sqrt{1 + \left(\frac{e}{l} + \frac{3 r^2 \cdot e}{8 l^3} + \frac{e^3}{2 l^3}\right)^2} \cdot \cos\left(\omega t - \tan^{-1}\left(\frac{8 l^2 \cdot e + 3 r^2 \cdot e + 4 e^3}{8 l^3}\right)\right)$$

$$- r \omega^2 \cdot \left(\frac{r}{l} + \frac{r^3}{4 l^3} + \frac{3 r \cdot e^2}{2 l^3}\right) \cdot \cos 2\omega t$$

$$+ r \omega^2 \cdot \frac{9 r^2 \cdot e}{8 l^3} \cdot \sin 3\omega t + r \omega^2 \cdot \frac{r^3}{4 l^3} \cdot \cos 4\omega t \qquad (58)$$

[Formula 59]

$$\frac{F}{mr\omega^2} = \frac{-a_p}{r\omega^2} \approx \sqrt{1 + \left(\frac{e}{l} + \frac{3r^2 \cdot e}{8l^3} + \frac{e^3}{2l^3}\right)^2} \cdot \cos\left(\omega t - \tan^{-1}\left(\frac{8l^2 \cdot e + 3r^2 \cdot e + 4e^3}{8l^3}\right)\right)$$
$$+ \left(\frac{r}{l} + \frac{r^3}{4l^3} + \frac{3r \cdot e^2}{2l^3}\right) \cdot \cos 2\omega t$$
$$- \frac{9r^2 \cdot e}{8l^3} \cdot \sin 3\omega t - \frac{r^3}{4l^3} \cdot \cos 4\omega t \qquad (59)$$

[Formula 60]

$$F_c = \frac{F}{\cos\varphi} \qquad (60)$$

[Formula 61]

$$F_s = F_c \cdot \sin\phi = F \cdot \tan\phi \qquad (61)$$

[Formula 62]

$$F_{bx} = F_{cx} = F_c \cdot \cos\phi = F \qquad (62)$$

[Formula 63]

$$F_{by} = F_{cy} = -F_c \cdot \sin\phi = -F \cdot \tan\phi = -F_s \qquad (63)$$

[Formula 64]

$$M_{rz} = F \cdot \tan\phi \, (r \cdot \cos\theta + l \cdot \cos\phi) \qquad (64)$$

[Formula 65]

$$M_{rz} = F \cdot (r \cdot \cos\theta \cdot \sin\phi + l \cdot \sin\phi \cdot \cos\phi) \cdot \frac{1}{\cos\phi} \qquad (65)$$

[Formula 66]

$$l \cdot \sin\phi = r \cdot \sin\theta - e \qquad (66)$$

[Formula 67]

$$M_{rz} = F \cdot r \cdot \frac{\sin(\theta + \phi)}{\cos\phi} - F \cdot e \qquad (67)$$

[Formula 68]

$$v_p = \frac{dx_p}{dt} = -(r \cdot \omega \cdot \sin\theta + l \cdot \phi' \cdot \sin\phi) \qquad (68)$$

[Formula 69]

$$l \cdot \phi' \cdot \cos\phi = r \cdot \omega \cdot \cos\theta \qquad (69)$$

[Formula 70]

$$l \cdot \phi' = \frac{r \cdot \omega \cdot \cos\theta}{\cos\phi} \qquad (70)$$

[Formula 71]

$$v_p = -r \cdot \omega \cdot \frac{\sin(\theta + \phi)}{\cos\phi} \qquad (71)$$

[Formula 72]

$$r \cdot \frac{\sin(\theta + \phi)}{\cos\phi} = -\frac{v_p}{\omega} \qquad (72)$$

[Formula 73]

$$M_{rz} = -F \cdot \left(\frac{v_p}{\omega} + e\right) \qquad (73)$$

[Formula 74]

$$
\begin{aligned}
F_p &= -m \cdot a_p \\
&\approx m \cdot r \cdot \omega^2 \cdot \sqrt{1 + \left(\frac{e}{l} + \frac{3r^2 \cdot e}{8l^3} + \frac{e^3}{2l^3}\right)^2} \cdot \cos\left(\omega t - \tan^{-1}\left(\frac{8l^2 \cdot e + 3r^2 \cdot e + 4e^3}{8l^3}\right)\right) \\
&\quad + m \cdot r \cdot \omega^2 \cdot \left(\frac{r}{l} + \frac{r^3}{4l^3} + \frac{3r \cdot e^2}{2l^3}\right) \cdot \cos 2\omega t \\
&\quad - m \cdot r \cdot \omega^2 \cdot \frac{9r^2 \cdot e}{8l^3} \cdot \sin 3\omega t - m \cdot r \cdot \omega^2 \cdot \frac{r^3}{4l^3} \cdot \cos 4\omega t \qquad (74)
\end{aligned}
$$

[Formula 75]

$$\lambda = \frac{l}{r} \qquad (75)$$

[Formula 76]

$$\xi = \frac{e}{r} \qquad (76)$$

[Formula 77]

$$\varepsilon = \sqrt{1 + \left(\frac{e}{l} + \frac{3r^2 \cdot e}{8l^3} + \frac{e^3}{2l^3}\right)^2} \qquad (77)$$

[Formula 78]

$$\tau = \tan^{-1}\left(\frac{8l^2 \cdot e + 3r^2 \cdot e + 4e^3}{8l^3}\right) \qquad (78)$$

[Formula 79]

$$\mu = \frac{r}{l} + \frac{r^3}{4l^3} + \frac{3r \cdot e^2}{2l^3} \qquad (79)$$

[Formula 80]

$$\eta = \frac{9r^2 \cdot e}{8l^3} \qquad (80)$$

[Formula 81]

$$\varepsilon \cdot \cos\tau = 1 \qquad (81)$$

[Formula 82]

$$\varepsilon \cdot \sin\tau = \tan\tau = \sqrt{\varepsilon^2 - 1} = \frac{e}{l} + \frac{3r^2 \cdot e}{8l^3} + \frac{e^3}{2l^3} \qquad (82)$$

[Formula 83]

$$\frac{M_{rz}}{m \cdot r^2 \cdot \omega^2} = -\frac{F}{m \cdot r^2 \cdot \omega^2}\left(\frac{v}{\omega} + e\right) = \frac{F}{m \cdot r \cdot \omega^2}\left(-\frac{e}{r} - \frac{v}{r \cdot \omega}\right)$$

$$\approx \{\varepsilon \cdot \cos(\omega t - \tau) + \mu \cdot \cos 2\omega t - \eta \cdot \sin 3\omega t - \frac{1}{4\lambda^3} \cdot \cos 4\omega t\}$$

$$\cdot \{-\xi + \varepsilon \cdot \sin(\omega t - \tau) + \frac{\mu}{2} \cdot \sin 2\omega t + \frac{\eta}{3} \cdot \cos 3\omega t - \frac{1}{16\lambda^3} \cdot \sin 4\omega t\} \qquad (83)$$

[Formula 84]

$$\frac{M_{rz}}{m \cdot r^2 \cdot \omega^2} \approx -\frac{\varepsilon \cdot \mu}{4} \cdot \sin(\omega t + \tau) - \left(\frac{\mu \cdot \eta}{12} + \frac{\eta}{96\lambda^3}\right) \cdot \cos \omega t - \varepsilon \cdot \xi \cdot \cos(\omega t - \tau)$$

$$+ \frac{\varepsilon^2}{2} \cdot \sin(2\omega t - 2\tau) + \frac{\mu}{32\lambda^3} \cdot \sin 2\omega t - \frac{\varepsilon \cdot \eta}{3} \cdot \cos(2\omega t + \tau) - \xi \cdot \mu \cdot \cos 2\omega t$$

$$+ \frac{3\varepsilon \cdot \mu}{4} \cdot \sin(3\omega t - \tau) + \frac{3\varepsilon}{32\lambda^3} \cdot \sin(3\omega t + \tau) + \xi \cdot \eta \cdot \sin 3\omega t$$

$$+ \frac{\mu^2}{4} \cdot \sin 4\omega t + \frac{2\varepsilon \cdot \eta}{3} \cdot \cos(4\omega t - \tau) + \frac{\xi}{4\lambda^3} \cdot \cos 4\omega t$$

$$- \frac{5\varepsilon}{32\lambda^3} \cdot \sin(5\omega t - \tau) + \frac{5\mu \cdot \eta}{12} \cdot \cos 5\omega t - \left(\frac{\eta^2}{6} + \frac{3\mu}{32\lambda^3}\right) \cdot \sin 6\omega t$$

$$- \frac{7\eta}{96\lambda^3} \cdot \cos 7\omega t + \frac{1}{128\lambda^6} \cdot \sin 8\omega t \qquad (84)$$

[Formula 85]

$$\mu = \frac{1}{\lambda} + \frac{1}{4\lambda^3} + \frac{3\xi^2}{2\lambda^3} \qquad (85)$$

[Formula 86]

$$\eta = \frac{9\xi}{8\lambda^3} \qquad (86)$$

[Formula 87]

$$\frac{M_{rz1}}{m \cdot r^2 \cdot \omega^2} \approx -\varepsilon \cdot \xi \cdot \cos(\omega t - \tau) - \left(\frac{\varepsilon}{4\lambda} + \frac{\varepsilon}{16\lambda^3} + \frac{3\varepsilon \cdot \xi^2}{8\lambda^3}\right) \cdot \sin(\omega t + \tau)$$

$$- \left(\frac{3\xi}{32\lambda^4} + \frac{9\xi}{256\lambda^6} + \frac{9\xi^3}{64\lambda^6}\right) \cdot \cos \omega t \qquad (87)$$

[Formula 88]

$$\frac{M_{rz1}}{m \cdot r^2 \cdot \omega^2} \approx \left(-\varepsilon \cdot \xi \cdot \sin \tau - \left(\frac{\varepsilon}{4\lambda} + \frac{\varepsilon}{16\lambda^3} + \frac{3\varepsilon \cdot \xi^2}{8\lambda^3}\right) \cdot \cos \tau\right) \cdot \sin \omega t$$

$$+ \left(-\varepsilon \cdot \xi \cdot \cos \tau - \left(\frac{\varepsilon}{4\lambda} + \frac{\varepsilon}{16\lambda^3} + \frac{3\varepsilon \cdot \xi^2}{8\lambda^3}\right) \cdot \sin \tau + \left(\frac{3\xi}{32\lambda^4} + \frac{9\xi}{256\lambda^6} + \frac{9\xi^3}{64\lambda^6}\right)\right) \cdot \cos \omega t$$

$$(88)$$

[Formula 89]

$$\frac{M_{r z 1}}{m \cdot r^{2} \cdot \omega^{2}} \approx - \sqrt{ \left( \varepsilon \cdot \xi \cdot \sin \tau + \left( \frac{\varepsilon}{4 \lambda} + \frac{\varepsilon}{16 \lambda^{3}} + \frac{3 \varepsilon \cdot \xi^{2}}{8 \lambda^{3}} \right) \cdot \cos \tau \right)^{2} + \left( \varepsilon \cdot \xi \cdot \cos \tau + \left( \frac{\varepsilon}{4 \lambda} + \frac{\varepsilon}{16 \lambda^{3}} + \frac{3 \varepsilon \cdot \xi^{2}}{8 \lambda^{3}} \right) \cdot \sin \tau + \frac{3 \xi}{32 \lambda^{4}} \right)^{2} }$$

$$\cdot \sin \left( \omega t + \tan^{-1} \left( \frac{\varepsilon \cdot \xi \cdot \cos \tau + \left( \frac{\varepsilon}{4 \lambda} + \frac{\varepsilon}{16 \lambda^{3}} + \frac{3 \varepsilon \cdot \xi^{2}}{8 \lambda^{3}} \right) \cdot \sin \tau + \frac{3 \xi}{32 \lambda^{4}}}{\varepsilon \cdot \xi \cdot \sin \tau + \left( \frac{\varepsilon}{4 \lambda} + \frac{\varepsilon}{16 \lambda^{3}} + \frac{3 \varepsilon \cdot \xi^{2}}{8 \lambda^{3}} \right) \cdot \cos \tau} \right) \right) \quad (89)$$

[Formula 90]

$$M_{r z 1} \approx m \cdot r^{2} \cdot \omega^{2} \cdot A_{M} \cdot \sin \left( \omega t + \alpha_{M} \right) \quad (90)$$

[Formula 91]

$$A_{M} = \sqrt{ \left( \varepsilon \cdot \xi \cdot \sin \tau + \left( \frac{\varepsilon}{4 \lambda} + \frac{\varepsilon}{16 \lambda^{3}} + \frac{3 \varepsilon \cdot \xi^{2}}{8 \lambda^{3}} \right) \cdot \cos \tau \right)^{2} + \left( \varepsilon \cdot \xi \cdot \cos \tau + \left( \frac{\varepsilon}{4 \lambda} + \frac{\varepsilon}{16 \lambda^{3}} + \frac{3 \varepsilon \cdot \xi^{2}}{8 \lambda^{3}} \right) \cdot \sin \tau + \frac{3 \xi}{32 \lambda^{4}} \right)^{2} } \quad (91)$$

[Formula 92]

$$\alpha_{M} = \tan^{-1} \left( \frac{ - \varepsilon \cdot \xi \cdot \cos \tau - \left( \frac{\varepsilon}{4 \lambda} + \frac{\varepsilon}{16 \lambda^{3}} + \frac{3 \varepsilon \cdot \xi^{2}}{8 \lambda^{3}} \right) \cdot \sin \tau - \frac{3 \xi}{32 \lambda^{4}}}{ - \varepsilon \cdot \xi \cdot \sin \tau - \left( \frac{\varepsilon}{4 \lambda} + \frac{\varepsilon}{16 \lambda^{3}} + \frac{3 \varepsilon \cdot \xi^{2}}{8 \lambda^{3}} \right) \cdot \cos \tau} \right) \quad (92)$$

[Formula 93]

$$m \cdot r \cdot \omega^{2} \cdot k_{M 1} \cdot L_{B} \quad (93)$$

[Formula 94]

$$m \cdot r^{2} \cdot \omega^{2} \cdot A_{M} = m \cdot r \cdot \omega^{2} \cdot k_{M 1} \cdot L_{B} \quad (94)$$

[Formula 95]

$$k_{M 1} = \frac{r \cdot A_{M}}{L_{B}} \quad (1)$$

[Formula 96]

$$\alpha_M + 1 8 0° + \tau \qquad (9 6)$$

[Formula 97]

$$\alpha_{M1} = 1 8 0° - \tau \qquad (2)$$

[Formula 98]

$$\alpha_{BM1} = 1 8 0° + \tau \qquad (3)$$

[Formula 99]

$$F_{IC} = \varepsilon - 2 k_{M1} \qquad (9 9)$$

[Formula 100]

$$F_{IC} = A_{IC} - B_{IC} \qquad (1 0 0)$$

[Formula 101]

$$A' + B' = \frac{F_{IC}}{\sigma} \qquad (1 0 1)$$

[Formula 102]

$$\sigma = \frac{F_{IC}}{A' + B'} = \frac{F_{IC}}{2\sqrt{(0.5 + \mu \cdot \cos \beta)^2 + (\mu \cdot \sin \beta)^2}} \qquad (1 0 2)$$

[Formula 103]

$$A_{IC} = \sigma \cdot A' = 0.5 F_{IC} + \frac{F_{IC}}{4\sqrt{(0.5 + \mu \cdot \cos \beta)^2 + (\mu \cdot \sin \beta)^2}} \qquad (1 0 3)$$

[Formula 104]

$$k_{IC} = \sqrt{C_x{}^2 + C_y{}^2} \qquad (1 0 4)$$

[Formula 105]

$$\alpha_{IC} = -\tau + \tan^{-1}\left(\frac{C_y}{C_x}\right) \qquad (105)$$

[Formula 106]

$$C_x = (A_{IC} - 0.5F_{IC}) \cdot \cos 2\chi - 0.5F_{IC} \qquad (106)$$

[Formula 107]

$$C_y = (A_{IC} - 0.5F_{IC}) \cdot \sin 2\chi \qquad (107)$$

[Formula 108]

$$k_{BIC} = \frac{\mu \cdot F_{IC}}{2\sqrt{(0.5 + \mu \cdot \cos\beta)^2 + (\mu \cdot \sin\beta)^2}} \qquad (108)$$

[Formula 109]

$$\alpha_{BIC} = \tau - (\Psi_F + 90°) + \tan^{-1}\left(\frac{\mu \cdot \cos(\alpha_{IC} + \tau + \Psi_F) + \sin\beta \cdot \sin(\alpha_{IC} + \tau + \Psi_F)}{-(\mu + \cos\beta) \cdot \sin(\alpha_{IC} + \tau + \Psi_F)}\right) \qquad (109)$$

[Formula 110]

$$k_{total} = \sqrt{(k_{M1} \cdot \cos\alpha_{M1} + k_{IC} \cdot \cos\alpha_{IC})^2 + (k_{M1} \cdot \sin\alpha_{M1} + k_{IC} \cdot \sin\alpha_{IC})^2} \qquad (4)$$

[Formula 111]

$$\alpha_{total} = \tan^{-1}\left(\frac{k_{M1} \cdot \sin\alpha_{M1} + k_{IC} \cdot \sin\alpha_{IC}}{k_{M1} \cdot \cos\alpha_{M1} + k_{IC} \cdot \cos\alpha_{IC}}\right) \qquad (5)$$

[Formula 112]

$$k_{Btotal} = \sqrt{(k_{BM1} \cdot \cos\alpha_{BM1} + k_{BIC} \cdot \cos\alpha_{BIC})^2 + (k_{BM1} \cdot \sin\alpha_{BM1} + k_{BIC} \cdot \sin\alpha_{BIC})^2} \qquad (6)$$

[Formula 113]

$$\alpha_{Btotal} = \tan^{-1}\left(\frac{k_{BM1} \cdot \sin\alpha_{BM1} + k_{BIC} \cdot \sin\alpha_{BIC}}{k_{BM1} \cdot \cos\alpha_{BM1} + k_{BIC} \cdot \cos\alpha_{BIC}}\right) \qquad (7)$$

[Formula 114]

$$U_a + U_b = F \qquad (110)$$

[Formula 115]

$$U_a \times L_a = U_b \times L_b \qquad (111)$$

[Formula 116]

$$U_m \times L = F \times L_h \qquad (112)$$

[Formula 117]

$$U_p \times L = M_p \qquad (113)$$

[Formula 118]

$$U_a + U_b = A \qquad (114)$$

[Formula 119]

$$U_a - U_b = B \qquad (115)$$

[Formula 120]

$$U_a = U_b \qquad (116)$$

[Formula 121]

$$-x_A - x_B = M \cdot \cos(30°) / U_a \qquad (117)$$

[Formula 122]

$$-y_A - y_B = M \cdot \sin(30°) / U_a \qquad (118)$$

[Formula 123]

$$x_A + x_B = 0 \qquad (119)$$

[Formula 124]

$$y_A - y_B = M / U_a \qquad (120)$$

## Claims

1. An engine (14) comprising:

a motion conversion mechanism (32) including a crankshaft (42) and a piston (38) located within a cylinder (36) for converting a reciprocating motion within the cylinder (36) of the piston (38) into a rotational motion of the crankshaft (42); and

a balancer mechanism (34) for reducing vibration generated as the motion conversion mechanism (32) operates, wherein, as viewed in an axial direction of the crankshaft (42), the shaft center of the crankshaft (42) is not located on the cylinder axis of the cylinder (36),

in the motion conversion mechanism (32), the angle of rotation of the crankshaft (42) found when the piston (38) moves from a top dead center to a bottom dead center is larger than the angle of rotation of the crankshaft (42) found when the piston (38) moves from the bottom dead center to the top dead center,

the balancer mechanism (34) includes a first balancer shaft (48) positioned parallel to the crankshaft (42),

the balancer mechanism (34) is a single-shaft balancer mechanism (34),

the motion conversion mechanism (32) includes a crank balancer (42A) provided on the crankshaft (42) for generating an inertia force as the crankshaft (42) rotates,

the first balancer shaft (48) includes a balancer (48A) for generating an inertia force as the first balancer shaft (48) rotates,

the motion conversion mechanism (32) further includes:

a connecting rod (40) for connecting the crankshaft (42) with the piston (38); and
a crankpin (46) provided on the crankshaft (42) for swingably supporting the connecting rod (40),

the first balancer shaft (48) is located on that side of the cylinder axis which is opposite to the side with the crankshaft (42) as viewed in the axial direction of the crankshaft (42),

the first balancer shaft (48) is capable of rotating in the direction opposite to the direction in which the crankshaft (42) rotates at the same speed as the crankshaft (42),

an association ratio is in the range of 3 to 5, the association ratio being defined as l/r where l is the length of the connecting rod (40) and r is the crank radius, and

an eccentricity ratio is equal to or higher than 0.1, the eccentricity ratio being defined as e/r where e is the offset quantity of the shaft center of the crankshaft (42) relative to the cylinder axis of the cylinder (36),

**characterized in that**

the first balancer shaft (48) is located in the range 50° to 80° from a reference position in the direction in which the crankshaft (42) rotates, such that a portion of the primary component of the inertia force generated as the motion conversion mechanism (32) operates and a portion of the inertia force generated as the first balancer shaft (48) rotates are used to reduce vibration generated by a primary component of an inertia couple caused by a lateral pressure from the piston (38), and

the reference position is one of the intersection points of a locus of the shaft center of the crankpin (46) formed as the crankshaft (42) rotates and a reference line, the reference line extending parallel to the cylinder axis and passing through the shaft center of the crankshaft (42), the one intersection point being the one closer to the piston (38) than the other one is.

2. The engine (14) according to claim 1, wherein:

the primary component of the inertia couple caused by the lateral pressure from the piston (38) is expressed as $mr^2\omega^2 \cdot A_M \cdot \sin(\theta + \alpha_M)$, where m is the reciprocating motion mass of the motion conversion mechanism (32), $\omega$ is the angular velocity of the rotating crankshaft (42), $A_M$ is the magnitude of the primary component of the inertia couple caused by the lateral pressure from the piston (38), and $\alpha_M$ is the phase of the primary component of the inertia couple caused by the lateral pressure from the piston (38),

the magnitude of the component in the crank balancer (42A) that contributes to reduction of the vibration generated by the primary component of the inertia couple caused by the lateral pressure from the piston (38), $k_{M1}$, is expressed by equation (1) below,

the phase of the component in the crank balancer (42A) that contributes to reduction of the vibration generated by the primary component of the inertia couple caused by the lateral pressure from the piston (38), $\alpha_{M1}$, is expressed by equation (2) below, and

the phase of the component in the balancer (48A) that contributes to reduction of the vibration generated by the primary component of the inertia couple caused by the lateral pressure from the piston (38), $\alpha_{BM1}$, is expressed by equation (3) below,

[Formula 1]

$$k_{M1} = \frac{r \cdot A_M}{L_B} \quad (1)$$

[Formula 2]

$$\alpha_{M1} = 180° - \tau \quad (2)$$

[Formula 3]

$$\alpha_{BM1} = 180° + \tau \quad (3)$$

where $L_B$ is the distance between the shaft center of the first balancer shaft (48) and the shaft center of the crankshaft (42) and $\tau$ is the phase delay in the primary component of the inertia force due to the reciprocating motion mass of the motion conversion mechanism (32).

3. The engine (14) according to claim 1 or 2, wherein:

the primary component of the inertia force generated as the motion conversion mechanism (32) operates includes:

a primary component of an inertia force due to a reciprocating motion mass including the piston (38); and an inertia force produced by the crank balancer (42A), and

a portion of the primary component of the inertia force due to the reciprocating motion mass, a portion of the inertia force produced by the crank balancer (42A) and a portion of the inertia force generated as the balancer mechanism (34) operates are used to reduce the vibration generated by the primary component of the inertia couple caused by the lateral pressure from the piston (38).

4. The engine (14) according to claim 3, wherein:
the remainder of the primary component of the inertia force due to the reciprocating motion mass, the remainder of the inertia force due to the crank balancer (42A), and the remainder of the inertia force generated as the balancer mechanism (34) operates are used to reduce vibration generated by a couple caused by the primary component of the inertia force generated as the motion conversion mechanism (32) operates and the inertia force generated as the balancer mechanism (34) operates to position the instantaneous center of rotation for the engine (14) at a predetermined position.

5. The engine (14) according to claim 4, wherein:

the magnitude of the crank balancer (42A) $k_{total}$ is expressed by equation (4) below,
the phase of the crank balancer (42A) $\alpha_{total}$ is expressed by equation (5) below,
the magnitude of the balancer (48A) $kB_{total}$ is expressed by equation (6) below, and
the phase of the balancer (48A) $\alpha B_{total}$ is expressed by equation (7) below,
[Formula 4]

$$k_{total} = \sqrt{(k_{M1} \cdot \cos\alpha_{M1} + k_{IC} \cdot \cos\alpha_{IC})^2 + (k_{M1} \cdot \sin\alpha_{M1} + k_{IC} \cdot \sin\alpha_{IC})^2} \quad (4)$$

[Formula 5]

$$\alpha_{tot,1} = \tan^{-1}\left(\frac{k_{M1}\cdot\sin\alpha_{M1}+k_{IC}\cdot\sin\alpha_{IC}}{k_{M1}\cdot\cos\alpha_{M1}+k_{IC}\cdot\cos\alpha_{IC}}\right) \qquad (5)$$

[Formula 6]

$$kB_{tot,1}=\sqrt{\left(kB_{M1}\cdot\cos\alpha B_{M1}+kB_{IC}\cdot\cos\alpha B_{IC}\right)^2+\left(kB_{M1}\cdot\sin\alpha B_{M1}+kB_{IC}\cdot\sin\alpha B_{IC}\right)^2} \qquad (6)$$

[Formula 7]

$$\alpha B_{tot,1}=\tan^{-1}\left(\frac{kB_{M1}\cdot\sin\alpha B_{M1}+kB_{IC}\cdot\sin\alpha B_{IC}}{kB_{M1}\cdot\cos\alpha B_{M1}+kB_{IC}\cdot\cos\alpha B_{IC}}\right) \qquad (7)$$

where $k_{M1}$ is the magnitude of the component in the crank balancer (42A) that reduces the vibration generated by the primary component of the inertia couple caused by the lateral pressure from the piston (38), $\alpha_{M1}$ is the phase of the component in the crank balancer (42A) that reduces the vibration generated by the primary component of the inertia couple caused by the lateral pressure from the piston (38), kic is the magnitude of the component in the crank balancer (42A) that reduces the vibration generated by the couple caused by the primary component of the inertia force generated as the motion conversion mechanism (32) operates and the inertia force generated as the balancer mechanism (34) operates, $\alpha_{IC}$ is the phase of the component in the crank balancer (42A) that reduces the vibration generated by the couple caused by the primary component of the inertia force generated as the motion conversion mechanism (32) operates and the inertia force generated as the balancer mechanism (34) operates, $kB_{M1}$ is the magnitude of the component in the balancer (48A) that reduces the vibration generated by the primary component of the inertia couple caused by the lateral pressure from the piston (38), $\alpha_{BM1}$ is the phase of the component in the balancer (48A) that reduces the vibration generated by the primary component of the inertia couple caused by the lateral pressure from the piston (38), $kB_{IC}$ is the magnitude of the component in the balancer (48A) that reduces the vibration generated by the couple caused by the primary component of the inertia force generated as the motion conversion mechanism (32) operates and the inertia force generated as the balancer mechanism (34) operates, $\alpha B_{IC}$ is the phase of the component in the balancer (48A) that reduces the vibration generated by the couple caused by the primary component of the inertia force generated as the motion conversion mechanism (32) operates and the inertia force generated as the balancer mechanism (34) operates.

6. The engine (14) according to claim 4, wherein:

the engine (14) is swingably placed on the vehicle body frame (12) of the vehicle, the engine (14) has a hole (28A) formed therein, a pivot shaft (30) being provided on the vehicle body frame (12), the pivot shaft (30) being inserted into the hole (28A), and the instantaneous center of rotation of the engine (14) is located at the position at which the hole (28A) is provided.

7. The engine (14) according to claim 4, wherein:

the engine (14) is placed on the vehicle body frame (12) of the vehicle by a link mechanism (50) provided therebetween, the engine (14) has a hole (28A) formed therein, a support shaft (50A) being provided on the link mechanism (50), the support shaft (50A) being inserted into the hole (28A), and the instantaneous center of rotation of the engine (14) is located at the position at which the hole (28A) is provided.

8. A straddled vehicle comprising the engine (14) according to any one of claims 1 to 7.

**Patentansprüche**

1. Motor (14), der umfasst:

einen Bewegungsumwandlungs-Mechanismus (32), der eine Kurbelwelle (42) und einem in einem Zylinder (36) befindlichen Kolben (38) enthält, zum Umwandeln einer Hin- und Herbewegung des Kolbens (38) im Inneren des Zylinders (36) in eine Drehbewegung der Kurbelwelle (42); und

einen Ausgleichs-Mechanismus (34) zum Reduzieren von Vibration, die bei Betrieb des Bewegungsumwandlungs-Mechanismus (32) erzeugt wird,

wobei, in einer axialen Richtung der Kurbelwelle (42) gesehen, die Wellenmitte der Kurbelwelle (42) nicht auf der Zylinderachse des Zylinders (36) liegt,

bei dem Bewegungsumwandlungs-Mechanismus (32) der Drehwinkel der Kurbelwelle (42), der gebildet wird, wenn sich der Kolben (38) von einem oberen Totpunkt zu einem unteren Totpunkt bewegt, größer ist als der Drehwinkel der Kurbelwelle (42), der gebildet wird, wenn sich der Kolben (38) von dem unteren Totpunkt zu dem oberen Totpunkt bewegt,

der Ausgleichs-Mechanismus (34) eine erste Ausgleichswelle (48) einschließt, die parallel zu der Kurbelwelle (42) angeordnet ist,

der Ausgleichs-Mechanismus (34) ein Ausgleichs-Mechanismus (34) mit einer einzelnen Welle ist,

der Bewegungsumwandlungs-Mechanismus (32) einen Kurbel-Ausgleichskörper (42A) enthält, der an der Kurbelwelle (42) vorhanden ist, um eine Trägheitskraft zu erzeugen, wenn sich die Kurbelwelle (42) dreht,

die erste Ausgleichswelle (48) einen Ausgleichskörper (48A) zum Erzeugen einer Trägheitskraft bei Drehen der ersten Ausgleichswelle (48) enthält,

der Bewegungsumwandlungs-Mechanismus (32) des Weiteren enthält:

eine Pleuelstange (40) zum Verbinden der Kurbelwelle (42) mit dem Kolben (38); und
einen Kurbelzapfen (46), der an der Kurbelwelle (42) vorhanden ist, zum schwenkbaren Lagern der Pleuelstange (40),

die erste Ausgleichswelle (48) an der Seite der Zylinderachse angeordnet ist, die, in der axialen Richtung der Kurbelwelle (42) gesehen, der Seite mit der Kurbelwelle (42) gegenüberliegt,

die erste Ausgleichswelle (48) in der Lage ist, sich in der Richtung entgegengesetzt zu der Richtung, in der sich die Kurbelwelle (42) dreht, mit der gleichen Geschwindigkeit wie die Kurbelwelle (42) zu drehen,

ein Assoziations-Verhältnis in dem Bereich von 3 bis 5 liegt, wobei das Assoziations-Verhältnis als l/r definiert ist und dabei l die Länge der Pleuelstange (40) ist und r der Kurbelradius ist, und

ein Exzentrizitäts-Verhältnis 0,1 oder mehr beträgt, wobei das Exzentrizitäts-Verhältnis als e/r definiert ist und dabei e das Maß des Versatzes der Wellenmitte der Kurbelwelle (42) relativ zu der Zylinderachse des Zylinders (36) ist,

**dadurch gekennzeichnet, dass**

die erste Ausgleichswelle (48) in dem Bereich von 50° bis 80° von einer Bezugsposition aus in der Richtung angeordnet ist, in der sich die Kurbelwelle (42) dreht, so dass ein Teil der primären Komponente der Trägheitskraft, die bei Betrieb des Bewegungsumwandlungs-Mechanismus (32) erzeugt wird, und ein Teil der Trägheitskraft, die bei Drehen der ersten Ausgleichswelle (48) erzeugt wird, genutzt werden, um Vibration zu reduzieren, die durch eine primäre Komponente eines Trägheitspaars erzeugt wird, das durch einen seitlichen Druck von dem Kolben (38) verursacht wird, und

die Bezugsposition einer der Schnittpunkte einer Ortskurve der Wellenmitte des Kurbelzapfens (46), die bei Drehen der Kurbelwelle (42) gebildet wird, und einer Bezugslinie ist, wobei sich die Bezugslinie parallel zu der Zylinderachse erstreckt und durch die Wellenmitte der Kurbelwelle (42) hindurch verläuft, wobei der eine Schnittpunkt derjenige ist, der näher an dem Kolben (38) liegt als der andere.

2. Motor (14) nach Anspruch 1, wobei:

die primäre Komponente des Trägheitspaars, das durch den seitlichen Druck von dem Kolben (38) verursacht wird, als $mr^2\omega^2 \cdot A_M \cdot \sin(\theta + \alpha_M)$ ausgedrückt wird, wobei m die Hin-und-Herbewegungs-Masse des Bewegungsumwandlungs-Mechanismus (32) ist, $\omega$ die Winkelgeschwindigkeit der sich drehenden Kurbelwelle (42) ist, $A_M$ der Betrag der primären Komponente des Trägheitspaars ist, das durch den seitlichen Druck von dem Kolben (38) verursacht wird, und $\alpha_M$ die Phase der primären Komponente des Trägheitspaars ist, das durch den seitlichen Druck von dem Kolben (38) verursacht wird,

der Betrag $k_{M1}$ der Komponente an dem Kurbel-Ausgleichskörper (42A), die zu Reduzierung der Vibration beiträgt, die durch die primäre Komponente des Trägheitspaars erzeugt wird, das durch den seitlichen Druck von dem Kolben (38) verursacht wird, mittels der untenstehenden Gleichung (1) ausgedrückt wird,

die Phase $\alpha_{M1}$ der Komponente an dem Kurbel-Ausgleichskörper (42A), die zu Reduzierung der Vibration beiträgt, die durch die primäre Komponente des Trägheitspaars erzeugt wird, das durch den seitlichen Druck von dem Kolben (38) verursacht wird, mittels der untenstehenden Gleichung (2) ausgedrückt wird,
die Phase $\alpha_{BM1}$ der Komponente an dem Ausgleichskörper (48A), die zu Reduzierung der Vibration beiträgt, die durch die primäre Komponente des Trägheitspaars erzeugt wird, das durch den seitlichen Druck von dem Kolben (38) verursacht wird, mittels der untenstehenden Gleichung (3) ausgedrückt wird,
[Formel 1]

$$k_{M1} = \frac{r \cdot A_M}{L_B} \qquad (1)$$

[Formel 2]

$$\alpha_{M1} = 180° - \tau \qquad (2)$$

[Formel 3]

$$\alpha_{BM1} = 180° + \tau \qquad (3)$$

wobei $L_B$ der Abstand zwischen der Wellenmitte der ersten Ausgleichswelle (48) und der Wellenmitte der Kurbelwelle (42) ist und $\tau$ die Phasenverzögerung bei der primären Komponente der Trägheitskraft aufgrund der Hin-und-Herbewegungs-Masse des Bewegungsumwandlungs-Mechanismus (32) ist.

3. Motor (14) nach Anspruch 1 oder 2, wobei:

die primäre Komponente der Trägheitskraft, die bei Betrieb des Bewegungsumwandlungs-Mechanismus (32) erzeugt wird, einschließt:

eine primäre Komponente einer Trägheitskraft aufgrund einer Hin-und-Herbewegungs-Masse einschließlich des Kolbens (38); sowie
eine Trägheitskraft, die durch den Kurbel-Ausgleichskörper (42A) erzeugt wird, und

ein Teil der primären Komponente der Trägheitskraft aufgrund der Hin-und-Herbewegungs-Masse, ein Teil der durch den Kurbel-Ausgleichskörper (42A) erzeugten Trägheitskraft sowie ein Teil der Trägheitskraft, die bei Betrieb des Ausgleichs-Mechanismus (34) erzeugt wird, genutzt werden, um die Vibration zu reduzieren, die durch die primäre Komponente des Trägheitspaars erzeugt wird, das durch den seitlichen Druck von dem Kolben (38) verursacht wird.

4. Motor (14) nach Anspruch 3, wobei:
der verbleibende Teil der primären Komponente der Trägheitskraft aufgrund der Hin-und-Herbewegungs-Masse, der verbleibende Teil der Trägheitskraft aufgrund des Kurbel-Ausgleichskörpers (42A) und der verbleibende Teil der Trägheitskraft, die bei Betrieb des Ausgleichs-Mechanismus (34) erzeugt wird, dazu genutzt werden, Vibration zu reduzieren, die durch ein Kräftepaar erzeugt wird, das durch die primäre Komponente der Trägheitskraft, die bei Betrieb des Bewegungsumwandlungs-Mechanismus (32) erzeugt wird, und die Trägheitskraft verursacht wird, die bei Betrieb des Ausgleichs-Mechanismus (34) erzeugt wird, um den momentanen Drehmittelpunkt für den Motor (14) an eine vorgegebene Position zu bringen.

5. Motor (14) nach Anspruch 4, wobei:

der Betrag $k_{total}$ des Kurbel-Ausgleichskörpers (42A) mittels der untenstehenden Gleichung (4) ausgedrückt wird,
die Phase $\alpha_{total}$ des Kurbel-Ausgleichskörpers (42A) mittels der untenstehenden Gleichung (5) ausgedrückt wird,
der Betrag $kB_{total}$ des Ausgleichskörpers (48A) mittels der untenstehenden Gleichung (6) ausgedrückt wird, und
die Phase $\alpha B_{total}$ des Ausgleichskörpers (48A) mittels der untenstehenden Gleichung (7) ausgedrückt wird,
[Formel 4]

$$k_{total} = \sqrt{(k_{M1} \cdot \cos \alpha_{M1} + k_{IC} \cdot \cos \alpha_{IC})^2 + (k_{M1} \cdot \sin \alpha_{M1} + k_{IC} \cdot \sin \alpha_{IC})^2} \qquad (4)$$

[Formel 5]

$$\alpha_{total} = \tan^{-1} \left( \frac{k_{M1} \cdot \sin \alpha_{M1} + k_{IC} \cdot \sin \alpha_{IC}}{k_{M1} \cdot \cos \alpha_{M1} + k_{IC} \cdot \cos \alpha_{IC}} \right) \qquad (5)$$

[Formel 6]

$$kB_{total} = \sqrt{(kB_{M1} \cdot \cos \alpha B_{M1} + kB_{IC} \cdot \cos \alpha B_{IC})^2 + (kB_{M1} \cdot \sin \alpha B_{M1} + kB_{IC} \cdot \sin \alpha B_{IC})^2} \qquad (6)$$

[Formel 7]

$$\alpha B_{total} = \tan^{-1} \left( \frac{kB_{M1} \cdot \sin \alpha B_{M1} + kB_{IC} \cdot \sin \alpha B_{IC}}{kB_{M1} \cdot \cos \alpha B_{M1} + kB_{IC} \cdot \cos \alpha B_{IC}} \right) \qquad (7)$$

wobei $k_{M1}$ der Betrag der Komponente an dem Kurbel-Ausgleichskörper (42A) ist, die die Vibration reduziert, die durch die primäre Komponente des Trägheitspaars erzeugt wird, das durch den seitlichen Druck von dem Kolben (38) verursacht wird,

$\alpha_{M1}$ die Phase der Komponente an dem Kurbel-Ausgleichskörper (42A) ist, die die Vibration reduziert, die durch die primäre Komponente des Trägheitspaars erzeugt wird, das durch den seitlichen Druck von dem Kolben (38) verursacht wird,

$k_{IC}$ der Betrag der Komponente an dem Kurbel-Ausgleichskörper (42A) ist, die die Vibration reduziert, die durch das Kräftepaar erzeugt wird, das durch die primäre Komponente der Trägheitskraft, die bei Betrieb des Bewegungsumwandlungs-Mechanismus (32) erzeugt wird, und die Trägheitskraft verursacht wird, die bei Betrieb des Ausgleichs-Mechanismus (34) erzeugt wird,

$\alpha_{IC}$ die Phase der Komponente an dem Kurbel-Ausgleichskörper (42A) ist, die die Vibration reduziert, die durch das Kräftepaar erzeugt wird, das durch die primäre Komponente der Trägheitskraft, die bei Betrieb des Bewegungsumwandlungs-Mechanismus (32) erzeugt wird, und die Trägheitskraft verursacht wird, die bei Betrieb des Ausgleichs-Mechanismus (34) erzeugt wird,

$kB_{M1}$ der Betrag der Komponente an dem Ausgleichskörper (48A) ist, die die Vibration reduziert, die durch die primäre Komponente des Trägheitspaars erzeugt wird, das durch den seitlichen Druck von dem Kolben (38) verursacht wird,

$\alpha_{BM1}$ die Phase der Komponente an dem Ausgleichskörper (48A) ist, die die Vibration reduziert, die durch die primäre Komponente des Trägheitspaars erzeugt wird, das durch den seitlichen Druck von dem Kolben (38) verursacht wird,

$kB_{IC}$ der Betrag der Komponente an dem Ausgleichskörper (48A) ist, die die Vibration reduziert, die durch das Kräftepaar erzeugt wird, das durch die primäre Komponente der Trägheitskraft, die bei Betrieb des Bewegungsumwandlungs-Mechanismus (32) erzeugt wird, und die Trägheitskraft verursacht wird, die bei Betrieb des Ausgleichs-Mechanismus (34) erzeugt wird,

$\alpha B_{IC}$ die Phase der Komponente an dem Ausgleichskörper (48A) ist, die die Vibration reduziert, die durch das Kräftepaar erzeugt wird, das durch die primäre Komponente der Trägheitskraft, die bei Betrieb des Bewegungsumwandlungs-Mechanismus (32) erzeugt wird, und die Trägheitskraft verursacht wird, die bei Betrieb des Ausgleichs-Mechanismus (34) erzeugt wird.

6. Motor (14) nach Anspruch 4, wobei:

der Motor (14) schwenkbar an dem Fahrzeug-Karosserierahmen (12) des Fahrzeugs angeordnet ist,
der Motor (14) ein darin ausgebildetes Loch (28A) aufweist, eine Schwenkwelle (30) an dem Fahrzeug-Karosserierahmen (12) vorhanden ist und die Schwenkwelle (30) in das Loch (28A) eingeführt ist, und
der momentane Drehmittelpunkt des Motors (14) sich an der Position befindet, an der das Loch (28A) vorhanden ist.

**7.** Motor (14) nach Anspruch 4, wobei:

der Motor (14) an dem Fahrzeug-Karosserierahmen (12) des Fahrzeugs über einen dazwischen vorhandenen Verbindungs-Mechanismus (50) angeordnet ist,
der Motor (14) ein darin ausgebildetes Loch (28A) aufweist, eine Trage-Welle (30) an dem Verbindungs-Mechanismus (50) vorhanden ist und die Trage-Welle (30) in das Loch (28A) eingeführt ist, und
der momentane Drehmittelpunkt des Motors (14) sich an der Position befindet, an der das Loch (28A) vorhanden ist.

**8.** Spreizsitz-Fahrzeug, das den Motor (14) nach einem der Ansprüche 1 bis 7 umfasst.

**Revendications**

**1.** Moteur (14) comprenant :

un mécanisme de conversion de mouvement (32) comprenant un vilebrequin (42) et un piston (38) situé dans un cylindre (36) pour convertir un mouvement de va-et-vient à l'intérieur du cylindre (36) du piston (38) en un mouvement de rotation du vilebrequin (42) ; et
un mécanisme d'équilibrage (34) pour réduire des vibrations générées lorsque le mécanisme de conversion de mouvement (32) fonctionne,
dans lequel, lorsqu'observé dans une direction axiale du vilebrequin (42), le centre d'arbre du vilebrequin (42) n'est pas situé sur l'axe de cylindre du cylindre (36),
dans le mécanisme de conversion de mouvement (32), l'angle de rotation du vilebrequin (42) trouvé lorsque le piston (38) passe d'un point mort haut à un point mort bas est plus grand que l'angle de rotation du vilebrequin (42) trouvé lorsque le piston (38) passe du point mort bas au point mort haut,
le mécanisme d'équilibrage (34) comprend un premier arbre d'équilibrage (48) positionné parallèlement au vilebrequin (42),
le mécanisme d'équilibrage (34) est un mécanisme d'équilibrage à arbre unique (34), le mécanisme de conversion de mouvement (32) comprend un équilibreur de manivelle (42A) agencé sur le vilebrequin (42) pour générer une force d'inertie lorsque le vilebrequin (42) tourne,
le premier arbre d'équilibrage (48) comprend un équilibreur (48A) pour générer une force d'inertie lorsque le premier arbre d'équilibrage (48) tourne,
le mécanisme de conversion de mouvement (32) comprend en outre :

une bielle (40) pour relier le vilebrequin (42) au piston (38) ; et
un maneton (46) agencé sur le vilebrequin (42) pour supporter de manière oscillante la bielle (40),

le premier arbre d'équilibrage (48) est situé sur le côté de l'axe de cylindre qui est opposé au côté avec le vilebrequin (42) comme observé dans la direction axiale du vilebrequin (42),
le premier arbre d'équilibrage (48) est capable de tourner dans la direction opposée à la direction dans laquelle le vilebrequin (42) tourne à la même vitesse que le vilebrequin (42),
un rapport d'association se trouve dans la plage de 3 à 5, le rapport d'association étant défini par l/r où l est la longueur de la bielle (40) et r est le rayon de manivelle, et
un rapport d'excentricité est égal ou supérieur à 0,1, le rapport d'excentricité étant défini par e/r où e est la quantité de décalage du centre d'arbre du vilebrequin (42) par rapport à l'axe de cylindre du cylindre (36),
**caractérisé en ce que**
le premier arbre d'équilibrage (48) est situé dans la plage de 50° à 80° par rapport à une position de référence dans la direction dans laquelle tourne le vilebrequin (42), de sorte qu'une partie de la composante principale de la force d'inertie générée lorsque le mécanisme de conversion de mouvement (32) fonctionne et une partie de la force d'inertie générée lorsque le premier arbre d'équilibrage (48) tourne sont utilisées pour réduire des vibrations générées par une composante principale d'un couple d'inertie provoqué par une pression latérale depuis le piston (38), et
la position de référence est un premier des points d'intersection d'un lieu du centre d'arbre du maneton (46) formé lorsque le vilebrequin (42) tourne et d'une ligne de référence, la ligne de référence s'étendant parallèlement à l'axe de cylindre et passant par le centre d'arbre du vilebrequin (42), le premier point d'intersection étant celui qui est plus proche du piston (38) par rapport à l'autre.

2. Moteur (14) selon la revendication 1, dans lequel :

la composante principale du couple d'inertie provoqué par la pression latérale depuis le piston (38) est exprimée par $mr^2\omega^2 \cdot A_M \cdot \sin(\theta + \alpha m)$, où m est la masse de mouvement de va-et-vient du mécanisme de conversion de mouvement (32), $\omega$ est la vitesse angulaire du vilebrequin en rotation (42), $A_M$ est la grandeur de la composante principale du couple d'inertie provoqué par la pression latérale depuis le piston (38), et $\alpha_M$ est la phase de la composante principale du couple d'inertie provoqué par la pression latérale depuis le piston (38),

la grandeur de la composante dans l'équilibreur de manivelle (42A) qui contribue à une réduction des vibrations générées par la composante principale du couple d'inertie provoqué par la pression latérale depuis le piston (38), $\kappa_{M1}$, est exprimée par l'équation (1) ci-dessous,

la phase de la composante dans l'équilibreur de manivelle (42A) qui contribue à une réduction des vibrations générées par la composante principale du couple d'inertie provoqué par la pression latérale depuis le piston (38), $\alpha_{M1}$, est exprimée par l'équation (2) ci-dessous, et

la phase de la composante dans l'équilibreur (48A) qui contribue à une réduction des vibrations générées par la composante principale du couple d'inertie provoqué par la pression latérale depuis le piston (38), $\alpha_{BM1}$, est exprimée par l'équation (3) ci-dessous,

[Formule 1]

$$k_{M1} = \frac{r \cdot A_M}{L_B} \qquad (1)$$

[Formule 2]

$$\alpha_{M1} = 180° - \tau \qquad (2)$$

[Formule 3]

$$\alpha_{BM1} = 180° + \tau \qquad (3)$$

où $L_B$ est la distance entre le centre d'arbre du premier arbre d'équilibrage (48) et le centre d'arbre du vilebrequin (42) et $\tau$ est le retard de phase dans la composante principale de la force d'inertie dû à la masse de mouvement de va-et-vient du mécanisme de conversion de mouvement (32).

3. Moteur (14) selon la revendication 1 ou 2, dans lequel :

la composante principale de la force d'inertie générée lorsque le mécanisme de conversion de mouvement (32) fonctionne comprend :

une composante principale d'une force d'inertie due à une masse de mouvement de va-et-vient comprenant le piston (38) ; et
une force d'inertie produite par l'équilibreur de manivelle (42A), et

une partie de la composante principale de la force d'inertie due à la masse de mouvement de va-et-vient, une partie de la force d'inertie produite par l'équilibreur de manivelle (42A) et une partie de la force d'inertie générée lorsque le mécanisme d'équilibrage (34) fonctionne sont utilisées pour réduire les vibrations générées par la composante principale du couple d'inertie provoqué par la pression latérale depuis le piston (38).

4. Moteur (14) selon la revendication 3, dans lequel :
le reste de la composante principale de la force d'inertie due à la masse de mouvement de va-et-vient, le reste de la force d'inertie due à l'équilibreur de manivelle (42A), et le reste de la force d'inertie générée lorsque le mécanisme d'équilibrage (34) fonctionne sont utilisés pour réduire des vibrations générées par un couple provoqué par la composante principale de la force d'inertie générée lorsque le mécanisme de conversion de mouvement (32) fonctionne et de la force d'inertie générée lorsque le mécanisme d'équilibrage (34) fonctionne pour positionner le centre de rotation instantané du moteur (14) à une position prédéterminée.

**5.** Moteur (14) selon la revendication 4, dans lequel :

la grandeur de l'équilibreur de manivelle (42A) $\kappa_{total}$ est exprimée par l'équation (4) ci-dessous,
la phase de l'équilibreur de manivelle (42A) $\alpha_{total}$ est exprimée par l'équation (5) ci-dessous,
la grandeur de l'équilibreur (48A) $\kappa B_{total}$ est exprimée par l'équation (6) ci-dessous, et
la phase de l'équilibreur (48A) $\alpha B_{total}$ est exprimée par l'équation (7) ci-dessous,
[Formule 4]

$$\kappa_{total} = \sqrt{(\kappa_{M1} \cdot \cos\alpha_{M1} + \kappa_{IC} \cdot \cos\alpha_{IC})^2 + (\kappa_{M1} \cdot \sin\alpha_{M1} + \kappa_{IC} \cdot \sin\alpha_{IC})^2} \qquad (4)$$

[Formule 5]

$$\alpha_{total} = \tan^{-1}\left(\frac{\kappa_{M1} \cdot \sin\alpha_{M1} + \kappa_{IC} \cdot \sin\alpha_{IC}}{\kappa_{M1} \cdot \cos\alpha_{M1} + \kappa_{IC} \cdot \cos\alpha_{IC}}\right) \qquad (5)$$

[Formule 6]

$$\kappa B_{total} = \sqrt{(\kappa B_{M1} \cdot \cos\alpha B_{M1} + \kappa B_{IC} \cdot \cos\alpha B_{IC})^2 + (\kappa B_{M1} \cdot \sin\alpha B_{M1} + \kappa B_{IC} \cdot \sin\alpha B_{IC})^2} \qquad (6)$$

[Formule 7]

$$\alpha B_{total} = \tan^{-1}\left(\frac{\kappa B_{M1} \cdot \sin\alpha B_{M1} + \kappa B_{IC} \cdot \sin\alpha B_{IC}}{\kappa B_{M1} \cdot \cos\alpha B_{M1} + \kappa B_{IC} \cdot \cos\alpha B_{IC}}\right) \qquad (7)$$

où $k_{M1}$ est la grandeur de la composante dans l'équilibreur de manivelle (42A) qui réduit les vibrations générées par la composante principale du couple d'inertie provoqué par la pression latérale depuis le piston (38),
$\alpha_{M1}$ est la phase de la composante dans l'équilibreur de manivelle (42A) qui réduit les vibrations générées par la composante principale du couple d'inertie provoqué par la pression latérale depuis le piston (38),
$\kappa_{IC}$ est la grandeur de la composante dans l'équilibreur de manivelle (42A) qui réduit les vibrations générées par le couple provoqué par la composante principale de la force d'inertie générée lorsque le mécanisme de conversion de mouvement (32) fonctionne et de la force d'inertie générée lorsque le mécanisme d'équilibrage (34) fonctionne,
$\alpha_{IC}$ est la phase de la composante dans l'équilibreur de manivelle (42A) qui réduit les vibrations générées par le couple provoqué par la composante principale de la force d'inertie générée lorsque le mécanisme de conversion de mouvement (32) fonctionne et de la force d'inertie générée lorsque le mécanisme d'équilibrage (34) fonctionne,
$\kappa B_{M1}$ est la grandeur de la composante dans l'équilibreur (48A) qui réduit les vibrations générées par la composante principale du couple d'inertie provoqué par la pression latérale depuis le piston (38),
$\alpha_{BM1}$ est la phase de la composante dans l'équilibreur (48A) qui réduit les vibrations générées par la composante principale du couple d'inertie provoqué par la pression latérale depuis le piston (38),
$\kappa B_{IC}$ est la grandeur de la composante dans l'équilibreur (48A) qui réduit les vibrations générées par le couple provoqué par la composante principale de la force d'inertie générée lorsque le mécanisme de conversion de mouvement (32) fonctionne et de la force d'inertie générée lorsque le mécanisme d'équilibrage (34) fonctionne,
$\kappa B_{IC}$ est la phase de la composante dans l'équilibreur (48A) qui réduit les vibrations générées par le couple provoqué par la composante principale de la force d'inertie générée lorsque le mécanisme de conversion de mouvement (32) fonctionne et de la force d'inertie générée lorsque le mécanisme d'équilibrage (34) fonctionne.

**6.** Moteur (14) selon la revendication 4, dans lequel :

le moteur (14) est placé de manière oscillante sur la carrosserie de véhicule (12) du véhicule,
le moteur (14) a un trou (28A) formé à l'intérieur, un arbre de pivot (30) étant agencé sur la carrosserie de véhicule (12), l'arbre de pivot (30) étant inséré dans le trou (28A), et
le centre de rotation instantané du moteur (14) est situé à la position à laquelle le trou (28A) est agencé.

7. Moteur (14) selon la revendication 4, dans lequel :

le moteur (14) est placé sur la carrosserie de véhicule (12) du véhicule par un mécanisme de liaison (50) agencé entre eux,
le moteur (14) a un trou (28A) formé à l'intérieur, un arbre de support (50A) étant agencé sur le mécanisme de liaison (50), l'arbre de support (50A) étant inséré dans le trou (28A), et
le centre de rotation instantané du moteur (14) est situé à la position à laquelle le trou (28A) est agencé.

8. Véhicule à enfourcher comprenant le moteur (14) selon l'une quelconque des revendications 1 à 7.

FIG. 1

FIG. 2

$\alpha_{ir}+180°+\tau$

FIG. 3

FIG. 4

FIG. 5

FIG. 6

EP 3 141 729 B1

FIG. 7

65

FIG. 8

FIG. 9

FIG. 10

EP 3 141 729 B1

FIG. 11

FIG. 12

FIG. 13

FIG. 14

FIG. 15

FIG. 16

FIG. 17

FIG. 18

FIG. 19

FIG. 20

FIG. 21

FIG. 22

FIG. 23

FIG. 24

FIG. 25

**EP 3 141 729 B1**

**Patent documents cited in the description**

- JP 2003237674 A

- WO 2012171789 A